# EUROPÄISCHE PATENTSCHRIFT

(11) **EP 2 457 443 B1**
(45) Veröffentlichungstag und Bekanntmachung des Hinweises auf die Patenterteilung: **20.05.2015**
(21) Anmeldenummer: 11405357.2
(22) Anmeldetag: 16.11.2011
(51) Int. Cl.: A21C 3/08

(54) **Verfahren zum maschinellen Verdrillen von Teigstreifen**
Method for mechanical twisting of dough strips
Procédé de torsion mécanique de bandes de pâte

(30) Priorität: 24.11.2010 EP 10405225
(43) Veröffentlichungstag der Anmeldung: 30.05.2012
(73) Patentinhaber: Rondo Burgdorf AG, 3400 Burgdorf (CH)
(72) Erfinder: Ittig, Armin, 4554 Etziken (CH)
(74) Vertreter: Roshardt, Werner Alfred

(56) Entgegenhaltungen:
- EP-A1- 2 253 215
- US-A- 1 974 503
- US-A- 1 998 560
- US-A- 2 843 062
- US-A- 3 511 189

## Beschreibung

### Technisches Gebiet

Die Erfindung betrifft ein Verfahren und eine Vorrichtung zum maschinellen Verdrillen von mindestens einem Teigstreifen, welcher auf einem Träger bereit liegt.

### Stand der Technik

Es sind bereits verschiedene Verfahren zum maschinellen Verdrillen von Teigstreifen bekannt. In der DE 39 03 122 C1 der A. Fritsch GmbH wird beispielsweise ein Verfahren beschrieben, in welchem auf einem Förderband liegende Teigstreifen verdrillt werden. Dabei sind die Teigstreifen in einem Winkel zur Querrichtung des Förderbands ausgerichtet und werden vom Förderband zu einer Verdrillvorrichtung transportiert. Die Verdrillvorrichtung umfasst zwei Endlosbänder, welche schmaler als das Förderband sind. Diese Endlosbänder sind derart parallel zum Förderband ausgerichtet und oberhalb des Förderbands angeordnet, dass eines der Endlosbänder das erste Ende der auf dem Förderband liegenden Teigstreifen berührt, während das andere der Endlosbänder das zweite Ende der Teigstreifen berührt. Die beiden Endlosbänder werden mit unterschiedlichen Geschwindigkeiten betrieben, so dass die Teigstreifen an beiden Enden unterschiedlich schnell von den Endlosbändern auf dem Förderband nach vorne bewegt werden und dabei zwischen dem Förderband und den Endlosbändern in Längsrichtung der Teigstreifen gedreht werden. Durch die unterschiedlichen Drehgeschwindigkeiten der beiden Enden der Teigstreifen werden die Teigstreifen verdrillt. Die Geschwindigkeiten der beiden Endlosbänder dabei können derart angepasst werden, dass die verdrillten Teigstreifen nach der Verdrillvorrichtung quer zum Förderband ausgerichtet sind.

Der Nachteil dieses Verfahrens ist, dass die Teigstreifen nicht regelmässig verdrillt werden können und entsprechend immer Unregelmässigkeiten in der Verdrillung aufweisen. Zudem sind die Teigstreifen entweder vor oder nach dem Verdrillen in einem Winkel zur Querrichtung des Förderbands ausgerichtet. Der exakte Winkel zur Querrichtung des Förderbands ist abhängig vom Verdrillungsgrad der Teigstreifen. Dies verursacht eine umständliche Handhabung der Teigstreifen, wodurch die verwendete Vorrichtung komplex und unflexibel ist.

Ein weiteres Verfahren wird beispielsweise in der US 2004/0135289 A1 von der Firma Tromp Holding B.V. beschrieben. Dort werden zum Herstellen verdrillter Teigprodukte Teigstreifen horizontal zwischen zwei übereinanderliegenden Riemenanordnungen hindurch bewegt. Beide Riemenanordnungen bestehen aus einer Mehrzahl von nebeneinander angeordneten, im Wesentlichen in Transportrichtung der Teigstreifen ausgerichteten Endlosriemen. Die untere Riemenanordnung wird durch eine vordere, konische Antriebsrolle und eine hintere, zylinderförmige Umlenkrolle aufgespannt. Die obere Riemenanordnung wird durch eine vordere, zylinderförmige Umlenkrolle und eine hintere, konische Antriebsrolle aufgespannt. Die konischen Antriebsrollen sorgen dafür, dass die nebeneinander angeordneten Endlosriemen mit unterschiedlichen Geschwindigkeiten bewegt werden. Die vordere, konische Antriebsrolle der unteren Riemenanordnung läuft im Vergleich zur hinteren, konischen Antriebsrolle der oberen Riemenanordnung auf die entgegengesetzte Seite konisch zusammen. Dadurch ist die Geschwindigkeitsabfolge der nebeneinander angeordneten Endlosriemen der oberen Riemenanordnung gegenteilig zur Geschwindigkeitsabfolge der nebeneinander angeordneten Endlosriemen der oberen Riemenanordnung. Die quer zu den Endlosriemen der Riemenanordnungen ausgerichteten Teigstreifen werden daher verdrillt, wenn sie zwischen den beiden Riemenanordnungen hindurchbewegt werden. Dieses Verfahren hat den Nachteil, dass nur Teigstreifen mit einem quadratischen Querschnitt verdrillt werden können. Zudem hat es den Nachteil, dass die verwendete Vorrichtung nur mühsam zu reinigen ist.

Ein weiteres Verfahren zum maschinellen Verdrillen von Teigstreifen wird in der CH 652 566 A5 von Paul Andre Cornu beschrieben. Hier wird ein Teigband in Längsrichtung ausgerichtet auf einem Förderband transportiert und in Längsrichtung in Streifen geschnitten. Die so entstandenen Teigstreifen werden je durch eine Öffnung einer Verdrillvorrichtung geführt. Zum Verdrillen der Teigstreifen weisen diese Öffnungen der Verdrillanordnung drehbare Einsätze auf, welche den entsprechenden Teigstreifen festhalten und loslassen können. Beim Verdrillen wird die Verdrillvorrichtung mit der Transportgeschwindigkeit des Förderbands entlang dem Förderband bewegt, wobei die Teigstreifen von den drehbaren Einsätzen in den Öffnungen der Verdrillanordnung festgehalten und in Längsrichtung der Teigstreifen gedreht werden. Nach Abfahren einer bestimmten Wegstrecke mit der Verdrillvorrichtung werden die Teigstreifen von den drehbaren Einsätzen losgelassen und die Verdrillvorrichtung wird in ihre Ausgangsposition zurückgefahren. Dabei werden die Teigstreifen nicht gedreht. Sobald die Verdrillvorrichtung wieder an ihrer Ausgangsposition zurückgefahren ist, beginnt ein neuer Zyklus, in welchem die Teigstreifen weiter verdrillt werden.

Der Vorteil dieser Vorrichtung ist, dass aufgrund der Ausrichtung der Teigstreifen in Längsrichtung zum Förderband Endlosstreifen verdrillt werden können. Dadurch wird eine hohe Produktionskapazität erreicht. Der Nachteil ist jedoch, dass das Einrichten der Anlage sehr aufwändig ist, weil die Teigstreifen jeweils erst durch die Öffnungen eingefädelt werden müssen. Dadurch lohnt sich eine kurzzeitige Einrichtung der Anlage für eine kleinere Produktionsmenge nicht.

Ein weiteres Verfahren wird in der JP 06-327426 der Wako Giken Kogyo KK beschrieben. Dieses Verfahren wird zur Herstellung von Nudeln verwendet, wobei ein Teigband in Längsrichtung in Teigsteifen geteilt wird, welche verdrillt werden. Diese Teigstreifen werden jedoch nicht wie in der CH 652 566 A5 beschrieben als Endlosteigstreifen verdrillt, sondern zuerst in Stücke mit einer bestimmten Länge geschnitten. Danach werden die zurechtgeschnittenen Teigstreifen in einer in Längsrichtung gesehenen Mitte von einer Vorrichtung gegriffen. Diese Vorrichtung umfasst zwei Endlosbänder, welche quer zur Längsrichtung der Teigstreifen unterhalb und oberhalb der Teigstreifen angeordnet sind und zwischen welchen die Teigstreifen gehalten und verdrillt werden.

Der Nachteil an diesem Verfahren ist, dass das Verdrillen durch die zentrale Verdrilleinrichtung relativ unkontrolliert erfolgt.

Ein weiteres Beispiel einer Vorrichtung zum Verdrehen von Teigstreifen ist in der EP 2 253 215 von Rademaker B.V. beschrieben, welche erst nach dem Prioritätsdatum der vorliegenden Anmeldung offengelegt worden ist. Diese Vorrichtung umfasst mindestens ein Paar Greifer, mit welchen ein Teigstreifen an seinen beiden schmalen Seiten gegriffen und verdreht werden kann, indem die beiden Greifer um eine Rotationsachse gedreht werden. Die Teigstreifen werden auf einem Förderband querliegend bezüglich der Förderrichtung zu den Greifern transportiert. Die beiden schmalen Seiten (d.h. die Enden) der Teigstreifen reichen etwas über das Förderband hinaus, damit sie von den Greifern ergriffen und vom Förderband gehoben werden können. Während des Verdrehens können die Greifer entlang des Förderbands bewegt werden, wonach die Teigstreifen wieder auf dasselbe Förderband oder aber auf ein weiteres Förderband gelegt werden. Dabei können die Greifer entlang einer Endlosschlaufe bewegt werden. Die Bewegungsgeschwindigkeit der Greifer entspricht der Fördergeschwindigkeit des Förderbands. Die Vorrichtung kann auch mehrere Paare von Greifern umfassen. Dabei kann die Drehbewegung der Greifer durch einen Riemen oder eine Kette gemeinsam auf die Greifer übertragen werden.

Diese bekannten Anlagen sowie Verfahren zum Verdrillen von Teigstreifen sind entweder sehr spezifisch und daher unflexibel in der Anwendung, oder funktionieren nicht in zuverlässiger Weise und haben sich im Markt daher nicht halten können. Zudem ermöglichen sie oft nur ein unkontrolliertes Verdrillen.

### Darstellung der Erfindung

Aufgabe der Erfindung ist es, ein dem eingangs genannten technischen Gebiet zugehörendes Verfahren sowie eine Vorrichtung zu schaffen, welche ein kontrolliertes, regelmässiges Verdrillen von Teigstreifen ermöglichen.

Eine mögliche Lösung der Aufgabe ist dadurch definiert, dass der mindestens eine Teigstreifen von mindestens einer wenigstens zwei Greifeinheiten umfassenden Verdrillanordnung gegriffen und verdrillt wird. Dazu greifen die wenigstens zwei entlang einer Achse der Verdrillanordnung angeordneten Greifeinheiten den mindestens einen Teigstreifen an unterschiedlichen Greifpositionen entlang einer Längsachse des mindestens einen Teigstreifens und wenigstens eine der wenigstens zwei Greifeinheiten dreht den mindestens einen Teigstreifen um seine Längsachse. Dadurch wird der mindestens eine Teigstreifen entlang seiner Längsachse verdrillt.

Eine weitere Lösung der Aufgabe ist durch die Merkmale des Anspruchs 1 definiert. Gemäss der Erfindung wird der mindestens eine Teigstreifen von mindestens einer wenigstens zwei Greifeinheiten umfassenden Verdrillanordnung gegriffen und verdrillt. Dazu greifen die wenigstens zwei entlang einer im Wesentlichen geraden Linie angeordneten Greifeinheiten den mindestens einen Teigstreifen an unterschiedlichen Greifpositionen entlang einer Längsachse des mindestens einen Teigstreifens, wobei wenigstens eine der wenigstens zwei Greifeinheiten den mindestens einen Teigstreifen quer zur Längsachse des mindestens einen Teigstreifens greift, indem die Greifrichtung, aus welcher diese Greifeinheit den mindestens einen Teigstreifen greift, an ihrer Greifposition einen Winkel zur Ausrichtung der Längsachse des Teigstreifens einschliesst. Dazu dreht wenigstens eine der wenigstens zwei Greifeinheiten den mindestens einen Teigstreifen um seine Längsachse. Dadurch wird der mindestens eine Teigstreifen entlang seiner Längsachse verdrillt.

Der mindestens eine Teigstreifen wird somit von den wenigstens zwei Greifeinheiten gegriffen. Dies ist ein Unterschied zum Verfahren, welches in der DE 39 03 122 C1 beschrieben ist. Dort werden Teigstreifen auf einem als Förderband ausgebildeten Träger bereitliegend zur Verdrillvorrichtung transportiert. Die Verdrillvorrichtung greift jedoch die Teigstreifen nicht, sondern hält von oben gegen die Teigstreifen und dreht die Teigstreifen zwischen Förderband und Verdrillvorrichtung.

Weiter wird somit der mindestens eine Teigstreifen von wenigstens einer der wenigstens zwei Greifeinheiten quer zu seiner Längsachse gegriffen. Dies bedeutet, dass eine Greifrichtung, aus welcher diese wenigstens eine Greifeinheit den mindestens einen Teigstreifen greift, an ihrer Greifposition einen Winkel zur Ausrichtung der Längsachse des Teigstrelfens einschliesst. Entsprechend kann diese wenigstens eine der wenigstens zwei Greifeinheiten den mindestens einen Teigstreifen an einer beliebigen Greifposition zwischen den beiden Längsenden des mindestens einen Teigstreifens greifen. Dies ist ein Unterschied zu den in der EP 2 253 215 von Rademaker B.V. und in der US 3511189 beschriebenen Verfahren, gemäss welchem die Teigstreifen von zwei Greifeinheiten aus einer Längsrichtung der Teigstreifen gegriffen werden.

Eine mögliche, dem ersten möglichen Verfahren entsprechende, erfindungsgemässe Vorrichtung umfasst mindestens eine wenigstens zwei Greifeinheiten umfassende Verdrillanordnung, wobei die wenigstens zwei Greifeinheiten entlang einer Achse der Verdrillanordnung angeordnet sind um den mindestens einen Teigstreifen von den wenigstens zwei Greifeinheiten an unterschiedlichen Greifpositionen entlang einer Längsachse des mindestens einen Teigstreifens zu greifen. Dabei ist eine Greifersteuerung vorgesehen, um mindestens eine der wenigstens zwei Greifeinheiten anzusteuern. Dadurch kann der Teigstreifen von der mindestens einen angesteuerten Greifeinheit gedreht werden, wodurch der mindestens eine Teigstreifen entlang seiner Längsachse verdrillbar ist.

Eine weitere, dem weiteren möglichen Verfahren entsprechende, erfindungsgemässe Vorrichtung umfasst mindestens eine wenigstens zwei Greifeinheiten umfassende Verdrillanordnung, wobei die wenigstens zwei Greifeinheiten entlang einer im Wesentlichen geraden Linie angeordnet sind um den mindestens einen Teigstreifen von den wenigstens zwei Greifeinheiten an unterschiedlichen Greifpositionen entlang einer Längsachse des mindestens einen Teigstreifens zu greifen. Dabei ist wenigstens eine der wenigstens zwei Greifeinheiten ausgebildet, um den mindestens einen Teigstreifen quer zu seiner Längsachse zu greifen indem die Greifrichtung, aus welcher diese Greifeinheit den mindestens einen Teigstreifen greift, an ihrer Greifposition einen Winkel zur Ausrichtung der Längsachse des Teigstreifens einschliesst. Weiter ist eine Greifersteuerung vorgesehen, um mindestens eine der wenigstens zwei Greifeinheiten anzusteuern. Dadurch kann der Teigstreifen von der mindestens einen angesteuerten Greifeinheit gedreht werden, wodurch der mindestens eine Teigstreifen entlang seiner Längsachse verdrillbar ist.

Es ist zu bemerken, dass der hier verwendete Ausdruck "Verdrillanordnung" eine Kombination von wenigstens zwei Greifeinheiten bedeutet, welche derart entlang einer im Wesentlichen geraden Linie angeordnet sind, dass durch die wenigstens zwei Greifeinheiten ein Teigstreifen verdrillbar ist. Falls eine solche Verdrillanordnung beispielsweise zwei Greifelnheiten umfasst, so sind diese auf einer geraden Linie angeordnet. Dies ist mit der geometrischen Gegebenheit vergleichbar, dass zwei Punkte auf einer geraden Linie liegen. Falls eine solche Verdrillanordnung hingegen beispielsweise mehr als zwei Greifeinheiten umfasst, so sind diese Greifeinheiten entlang einer im Wesentlichen geraden Linie angeordnet. Hierbei besteht die Möglichkeit, dass die Greifeinheiten genau auf einer geraden Linie angeordnet sind. Es besteht aber auch die Möglichkeit, dass die Greifeinheiten auf einer etwas geschwungenen Linie angeordnet sind. Dies kann beispielsweise vorteilhaft sein, um nicht geradlinig ausgerichtete Teigstreifen greifen und verdrillen zu können. Weiter besteht aber auch die Möglichkeit, dass zwei der Greifeinheiten entlang der Längsachse eines zu greifenden Teigstreifens angeordnet sind und derart ausgebildet sind, dass sie den zu greifenden Teigstreifen an seinen Längsenden greifen und verdrillen können. In diesem Beispiel können die eine oder mehreren weiteren Greifeinheiten der Verdrillanordnung derart ausgebildet sein; dass sie den Teigstreifen quer zu seiner Längsachse greifen können. Um dies zu ermöglichen können die eine oder mehreren weiteren Greifeinheiten der Verdrillanordnung auch etwas seitlich versetzt zu den beiden den Teigstreifen an seinen Längsenden greifenden Greifeinheiten sein. Es versteht sich somit, dass es sich bei einer Verdrillanordnung nicht um eine separate Vorrichtung handeln muss. Es kann sich, wie gesagt, bei einer Verdrillanordnung um eine entsprechende Anordnung von wenigstens zwei Greifeinheiten handeln.

Bevorzugt wird ein Verdrillungsgrad des mindestens einen Teigstreifens dadurch gesteuert, dass eine Drehzahl, mit welcher der Teigstreifen von der wenigstens einen der wenigstens zwei Greifeinheiten gedreht wird, von einer Steuerungseinheit kontrolliert wird. Vorteilhafterweise umfasst die Vorrichtung eine entsprechende Steuerungseinheit um den Verdrillungsgrad des mindestens einen Teigstreifens zu steuern. Vorzugsweise ist durch diese Steuerungseinheit die Drehzahl kontrollierbar, mit welcher der Teigstreifen von der wenigstens einen der wenigstens zwei Greifeinheiten drehbar ist.

Für das Verdrillen kann der wenigstens eine Teigstreifen auch von mehr als nur einer der wenigstens zwei Greifeinheiten gedreht werden. Falls die Verdrillanordnung beispielsweise zwei Greifeinheiten umfasst, so besteht die Möglichkeit, dass beide Greifeinheiten den Teigstreifen mit unterschiedlichen Geschwindigkeiten drehen. Es besteht in diesem Fall aber auch die Möglichkeit, dass die beiden Greifeinheiten den Teigstreifen in entgegengesetzte Richtungen drehen. Falls die verwendete Verdrillanordnung hingegen mehr als zwei Greifeinheiten umfasst, so können mehrere oder alle Greifeinheiten den Teigstreifen mit unterschiedlichen Geschwindigkeiten und/oder in entgegengesetzte Richtungen drehen. Wichtig bei diesen unterschiedlichen Geschwindigkeiten und/oder Drehrichtungen ist, dass die Unterschiede zwischen den Drehgeschwindigkeiten und Drehrichtungen von benachbarten Greifeinheiten derart gewählt werden, dass der Teigstreifen in gewünschter Weise verdrillt wird.

Falls beispielsweise ein regelmässiges Verdrillen gewünscht ist und die Verdrillanordnung vier in gleichem Abstand auf einer im Wesentlichen geraden Linie angeordnete Greifeinheiten umfasst, so sollten die Drehgeschwindigkeiten der einzelnen Greifeinheiten entsprechend angepasst werden. Die Drehzahlunterschiede zwischen benachbarten Greifeinheiten sollten z.B. bei gleichen Abständen zwischen den Greifeinheiten gleich gross sein. So kann beispielsweise eine erste Greifeinheit den Teigstreifen nur halten und nicht drehen. Die nächstliegende Greifeinheit kann dann den Teigstreifen mit einer Drehzahl A drehen, während die beiden folgenden Greifeinheiten den Teigstreifen typischerweise mit einer doppelten bzw. dreifachen Drehzahl (2 x A bzw. 3 x A) drehen. Es besteht aber beispielsweise auch die Möglichkeit, dass die erste Greifeinheit den Teigstreifen mit einer Drehzahl B dreht, während die nächstliegende Greifeinheit den Teigstreifen nur mit einer einen Drittel so grossen Drehzahl (B/3) dreht. In diesem Fall würden die beiden folgenden Greifeinheiten den Teigstreifen in umgekehrte Richtung mit einer negativen, einen Drittel so grossen Drehzahl (-B/3) bzw. einer negativen, gleich grossen Drehzahl (-B) drehen. Falls aber ein unregelmässiges Verdrillen des Teigstreifens gewünscht ist, so können die Drehgeschwindigkeiten und Drehrichtungen entsprechend angepasst werden. Beispielsweise kann gewünscht sein, dass der Teigstreifen von einem ersten Ende zu einem zweiten Ende hin zunehmend verdrillt wird. Falls die Verdrillanordnung ebenfalls vier in gleichem Abstand auf einer im Wesentlichen geraden Linie angeordnete Greifeinheiten umfasst, so können die Unterschiede zwischen den Drehzahlen der benachbarten Greifeinheiten unterschiedlich sein. Die Drehzahlunterschiede können vom ersten Ende des Teigstreifens zum zweiten Ende des Teigstreifens zunehmend sein.

Da die zu verdrillenden Teigstreifen eine gewisse Elastizität aufweisen und sich nach dem Verdrillen wieder etwas zurückdrehen, besteht die Gefahr, dass sie sich dabei auch andersartig verformen, wie beispielsweise krümmen. Dieser ungewünschten Verformung kann vorgebeugt werden, indem das Zurückdrehen von der Verdrillanordnung vorgenommen wird. Dazu drehen die einzelnen Greifeinheiten den Teigstreifen nach dem Verdrillen wieder etwas zurück. Dies hat den Vorteil, dass der Teigstreifen nach dem Verdrillen kontrolliert etwas zurückgedreht wird, wodurch er sich nicht mehr unkontrolliert zurückdreht und dabei unkontrolliert verformt.

Der Vorteil der erfindungsgemässen Vorrichtung und des erfindungsgemässen Verfahrens ist, dass ein kontrolliertes und flexibel steuerbares Verdrillen der Teigstreifen ermöglicht wird.

Bevorzugt wird der mindestens eine Teigstreifen nach dem Greifen angehoben. Das bedeutet, dass der mindestens eine Teigstreifen nach dem Greifen nach oben vom Träger abgehoben wird. Dies hat den Vorteil, dass der Teigstreifen nicht mehr mit dem Träger in Kontakt ist und dadurch ein kontrollierteres Verdrillen des Teigstreifens ermöglicht wird. Alternativ dazu kann der mindestens eine Teigstreifen nach dem Greifen aber auch nicht angehoben werden. Beispielsweise besteht die Möglichkeit, dass der mindestens eine Teigstreifen nach dem Greifen horizontal vom Träger wegbewegt wird. Es besteht aber auch die Möglichkeit, dass der mindestens eine Teigstreifen nach dem Greifen nach unten bewegt wird. Dabei kann der mindestens eine Teigstreifen auch erst horizontal vom Träger wegbewegt und dann nach unten bewegt werden.

Vorzugsweise wird im Verfahren zum maschinellen Verdrillen von Teigstreifen der mindestens eine Teigstreifen von dem als Transportband ausgebildeten Träger gefördert, wobei der mindestens eine Teigstreifen durch die mindestens eine Verdrillanordnung vom Transportband gehoben wird, verdrillt wird und der verdrillte mindestens eine Teigstreifen wieder auf dem Transportband deponiert wird. So kann der verdrillte mindestens eine Teigstreifen unter Umständen wieder auf seiner ursprünglichen Position auf dem Transportband liegen. Die Förderung der Teigstreifen auf einem Transportband hat den Vorteil, dass ein effizientes Verdrillen von vielen Teigstreifen ermöglicht wird, wodurch die Produktionskapazität erhöht wird. Das Abheben des mindestens einen Teigstreifens vom Transportband hat den Vorteil, dass das Verdrillen kontrollierter erfolgt, da der mindestens eine Teigstreifen während des Verdrillens nicht stellenweise am Transportband kleben kann und dadurch zu Unregelmässigkeiten in der Verdrillung führen kann. Zudem ist der Verdrillgrad für jeden Teigstreifen individuell steuerbar.

Als Variante dazu kann der mindestens eine Teigstreifen auch nicht von einem Transportband gefördert werden, sondern auf einem Backblech der Verdrillanordnung zugeführt werden. Dabei kann das Backblech von Hand oder auf einem Transportband liegend zugeführt werden. In dieser Variante besteht ebenfalls die Möglichkeit, dass der mindestens eine Teigstreifen durch die mindestens eine Verdrillanordnung vom Träger gehoben wird, verdrillt wird und der verdrillte mindestens eine Teigstreifen wieder auf dem Träger deponiert wird.

Als weitere Variante kann der mindestens eine Teigstreifen auch zum Verdrillen nicht vom Träger (Transportband oder einer anderen Unterlage wie beispielsweise einem Backblech) hochgehoben werden. Beispielsweise besteht auch die Möglichkeit, dass der mindestens eine Teigstreifen vom Transportband zur mindestens einen Verdrillanordnung gefördert wird, so dass der mindestens eine Teigstreifen an einem Ende des Transportbands vom Transportband an die Verdrillanordnung übergeben wird, wobei er von den wenigstens zwei Greifeinheiten gegriffen wird. Danach kann der mindestens eine Teigstreifen verdrillt werden und es besteht die Möglichkeit, dass der verdrillte, mindestens eine Teigstreifen wieder auf einem Träger wie beispielsweise einem weiteren Transportband oder Backblech deponiert wird.

Als weitere Variante dazu besteht auch die Möglichkeit, dass der mindestens eine Teigstreifen von dem als Transportband ausgebildeten Träger gefördert oder von einem als Träger dienenden Backblech zugeführt wird, wobei der mindestens eine Teigstreifen durch die mindestens eine Verdrillanordnung in einer im Wesentlichen horizontalen Bewegung vom Träger übernommen wird. Um dies zu ermöglichen kann der Träger im Übernahmebereich nach unten bewegt werden. Es besteht aber auch die Möglichkeit, dass der Träger nicht im Übernahmebereich, sondern während der Übernahme als Gesamtes nach unten bewegt wird. Nach der Übernahme kann der mindestens eine Teigstreifen verdrillt werden und der verdrillte mindestens eine Teigstreifen kann wieder auf dem Träger oder auf einem anderen Träger deponiert werden.

Weiter besteht die Möglichkeit, dass der mindestens eine Teigstreifen vom Transportband zur mindestens einen Verdrillanordnung gefördert wird, so dass der mindestens eine Teigstreifen an einem Ende des Transportbands vom Transportband an die Verdrillanordnung übergeben wird, indem der mindestens eine Teigstreifen auf die Verdrillanordnung fällt, sodass er von den wenigstens zwei Greifeinheiten gegriffen werden kann. Danach kann der mindestens eine Teigstreifen verdrillt werden und es besteht die Möglichkeit, dass der verdrillte, mindestens eine Teigstreifen wieder auf einem Träger wie beispielsweise einem weiteren Transportband oder Backblech deponiert wird.

Vorteilhafterweise wird die mindestens eine Verdrillanordnung zum Aufheben des Teigstreifens auf den Träger abgesenkt. Danach kann die mindestens eine Verdrillanordnung mit dem hochgehobenen mindestens einen Teigstreifen wieder hochgehoben werden. Sie kann aber auch erst nach dem Deponieren des Teigstreifens wieder hochgehoben werden.

Dies hat den Vorteil, dass die mindestens eine Verdrillanordnung in einer gewissen Distanz zum Träger angeordnet ist und für das Aufheben des Teigstreifens auf den Träger abgesenkt wird. Wenn sich die mindestens eine Verdrillanordnung in dieser Distanz zum Träger befindet und dieser als Transportband ausgebildet ist, können auf dem Transportband geförderte Teigstreifen problemlos unter der mindestens einen Verdrillanordnung hindurch transportiert werden. Entsprechend behindert die mindestens eine Verdrillanordnung den Transport der Teigstreifen nicht.

Alternativ dazu können die wenigstens zwei Greifeinheiten der mindestens einen Verdrillanordnung auch aus unterschiedlichen Richtungen zum Träger bewegt werden, um den Teigstreifen zu greifen. Falls die mindestens eine Verdrillanordnung beispielsweise drei oder mehr Greifeinheiten umfasst, so können zwei der Greifeinheiten beidseitig von den Enden des Teigstreifens her zum Teigstreifen bewegt werden, während die weiteren Greifeinheiten quer zur Längsachse des Teigstreifens zum Teigstreifen bewegt werden können, um den Teigstreifen zu greifen. Selbstverständlich besteht auch die Möglichkeit, dass nur eine der wenigstens zwei Greifeinheiten von einer Seite von einem Ende des Teigstreifens her zum Teigstreifen bewegt wird, während die weitere oder die weiteren Greifeinheiten quer zur Längsachse des Teigstreifens zum Teigstreifen bewegt werden. In diesen Fällen sollte die verwendete Vorrichtung derart ausgebildet sein, dass der Abstand zwischen den wenigstens zwei Greifeinheiten variabel ist.

Es besteht aber auch die bisher unerwähnte Möglichkeit, dass der Träger zur mindestens einen Verdrillanordnung bewegt wird und die mindestens eine Verdrillanordnung an einem Ort bleibt. Dies ist besonders dann vorteilhaft, wenn der Träger für den mindestens einen Teigstreifen aus einem Backblech besteht. Dann ist es einfacher, dass Backblech beweglich zur mindestens einen Verdrillanordnung zu lagern als die Verdrillanordnung zum Backblech beweglich auszubilden.

Vorzugsweise wird die mindestens eine Verdrillanordnung während des Hebens des Teigstreifens mit einer Fördergeschwindigkeit des Transportbands entlang dem Transportband bewegt. Dies hat den Vorteil, dass das Aufheben des Teigstreifens vereinfacht wird. Zudem behält der Teigstreifen während des Aufhebens dieselbe Position über dem Transportband. Dadurch können auf dem Transportband Teigstreifen nahe beieinander liegend transportiert werden, ohne dass der hochgehobene Teigstreifen über einen weiteren Teigstreifen geführt würde, wodurch die Anordnung der Teigstreifen auf dem Transportband durcheinander gebracht würde.

Alternativ dazu besteht aber auch die Möglichkeit, dass die mindestens eine Verdrillanordnung während des Aufhebens des Teigstreifens mit einer anderen Geschwindigkeit als der Fördergeschwindigkeit des Transportbands entlang dem Transportband bewegt wird. Dadurch kann beispielsweise ein Abstand zwischen den Teigprodukten vergrössert, verringert oder in irgendeiner anderen Weise verändert werden. Andererseits kann aber die mindestens eine Verdrillanordnung während des Aufhebens des Teigstreifens auch gar nicht entlang dem Transportband bewegt werden.

Vorzugsweise wird die mindestens eine Verdrillanordnung während des Verdrillens des Teigstreifens mit einer der Fördergeschwindigkeit des Transportbands entsprechenden (d.h. gleichen) Geschwindigkeit entlang dem Transportband bewegt. Dies hat den Vorteil, dass der Teigstreifen während des Aufhebens dieselbe Position über dem Transportband behält. Dadurch können auf dem Transportband Teigstreifen nahe beieinanderliegend transportiert werden, ohne dass der hochgehobene Teigstreifen über einen weiteren Teigstreifen geführt würde, wodurch die Anordnung der Teigstreifen auf dem Transportband durcheinander gebracht würde.

Alternativ dazu besteht aber auch die Möglichkeit, dass die mindestens eine Verdrillanordnung während des Verdrillens des Teigstreifens mit einer anderen Geschwindigkeit als der Fördergeschwindigkeit des Transportbands entlang dem Transportband bewegt wird, oder dass die mindestens eine Verdrillanordnung während des Aufhebens des Teigstreifens gar nicht entlang dem Transportband bewegt wird.

Vorzugsweise wird die mindestens eine Verdrillanordnung während des Deponierens des Teigstreifens auf dem Transportband mit einer Fördergeschwindigkeit des Transportbands entlang dem Transportband bewegt. Dies hat den Vorteil, dass der Teigstreifen während des Deponierens des Teigstreifens auf dem Transportband dieselbe Position über dem Transportband behält. Dadurch können auf dem Transportband Teigstreifen nahe beieinander liegend transportiert werden, ohne dass der hochgehobene Teigstreifen über einen weiteren Teigstreifen geführt würde, wodurch die Anordnung der Teigstreifen auf dem Transportband durcheinander gebracht würde.

Alternativ dazu besteht aber auch die Möglichkeit, dass die mindestens eine Verdrillanordnung während des Deponierens des Teigstreifens auf dem Transportband mit einer anderen Geschwindigkeit als der Fördergeschwindigkeit des Transportbands entlang dem Transportband bewegt wird, oder dass die mindestens eine Verdrillanordnung während des Aufhebens des Teigstreifens gar nicht entlang dem Transportband bewegt wird.

Vorzugsweise wird die mindestens eine Verdrillanordnung nach dem Deponieren des mindestens einen Teigstreifens an eine Ausgangsposition entlang dem Transportband zurückgefahren. Dies hat den Vorteil, dass sich der nächstfolgende Teigsteifen auf dem Transportband und die mindestens eine Verdrillanordnung rascher an einer selben Position entlang dem Transportband befindet und entsprechend der nächstfolgende Teigstreifen rascher von der mindestens einen Verdrillanordnung hochgehoben werden kann. Zudem hat dies den Vorteil, dass, falls die mindestens eine Verdrillanordnung während des Hochhebens, Verdrillens oder Deponieren des Teigstreifens auf dem Transportband entlang dem Transportband bewegt wird, die mindestens eine Verdrillanordnung zurück an ihre Ursprungsposition entlang dem Transportband bewegt werden kann.

Bevorzugt wird die mindestens eine Verdrillanordnung nach dem Deponieren des mindestens einen Teigstreifens mit einer Geschwindigkeit, welche grösser als die Fördergeschwindigkeit des Transportbands ist, an eine Anfangsposition entlang dem Transportband zurückgefahren. Dies hat den Vorteil, dass, falls die mindestens eine Verdrillanordnung während des Hochhebens, Verdrillens und/oder Deponieren des Teigstreifens auf dem Transportband entlang dem Transportband bewegt wird, die mindestens eine Verdrillanordnung rascher zurück an ihre Ursprungsposition entlang dem Transportband bewegt werden kann. Dadurch kann rascher ein weiterer mindestens ein Teigstreifen von der mindestens einen Verdrillanordnung gegriffen und verdrillt werden. Entsprechend wird der Verdrillzyklus der mindestens einen Verdrillanordnung verkürzt. Dies ermöglicht, dass das Transportband mit einer grösseren Fördergeschwindigkeit betreibbar ist. Zudem ermöglicht es eine engere Anordnung von Teigstreifen auf dem Transportband. Entsprechend kann dadurch die Produktionskapazität erhöht werden. Alternativ dazu besteht aber auch die Möglichkeit, dass die Verdrillanordnung nach dem Deponieren des mindestens einen Teigstreifens entweder gar nicht oder mit einer anderen Geschwindigkeit entlang dem Transportband bewegt wird.

Vorteilhafterweise werden gleichzeitig durch mehrere Verdrillanordnungen mehrere Teigstreifen verdrillt. Dadurch kann die Produktionskapazität erhöht werden. In diesem Fall können die Verdrillanordnungen je einen Teigstreifen vom Transportband heben, verdrillen und wieder auf dem Transportband deponieren. Um die Produktionskapazität zu erhöhen, können die Verdrillanordnungen dabei mit der Fördergeschwindigkeit des Transportbands entlang dem Transportband bewegt werden. Nach dem Deponieren der Teigstreifen auf dem Transportband können die Verdrillanordnungen entlang dem Transportband zurückgefahren werden, um einen neuen Satz von Teigstreifen hochzuheben und zu verdrillen.

Alternativ dazu kann aber auch nur durch eine Verdrillanordnung ein Teigstreifen verdrillt werden.

Vorzugsweise sind die mehreren Verdrillanordnungen parallel nebeneinander angeordnet. Dies bedeutet, dass die im Wesentlichen geraden Linien, entlang welchen die wenigstens zwei Greifeinheiten der einzelnen Verdrillanordnungen angeordnet sind, parallel zueinander verlaufen. Dies hat den Vorteil, dass mehrere parallel angeordnete Teigstreifen gleichzeitig gegriffen und verdrillt werden können. Da eine parallele Anordnung von Teigstreifen platzsparend ist und maschinell einfach steuerbar ist, kann dadurch zudem die Produktionskapazität einfach erhöht werden.

Es besteht aber auch die Möglichkeit, dass die Verdrillanordnung derart individuell schwenkbar zueinander ausgebildet sind, dass die im Wesentlichen geraden Linien, entlang welchen die wenigstens zwei Greifeinheiten der einzelnen Verdrillanordnungen angeordnet sind, individuell schwenkbar zu einander sind. Dadurch kann die Ausrichtung der Verdrillanordnungen an die Ausrichtung der zu verdrillenden Teigstreifen angepasst werden. Dies hat den Vorteil, dass die Teigstreifen auch bei schwankender Ausrichtung einfacher und zuverlässiger hochgehoben werden können.

Alternativ dazu können die Verdrillanordnungen auch in einem Winkel zueinander angeordnet sein.

Vorzugsweise wird der mindestens eine Teigstreifen nach dem Verdrillen gestreckt. Da die Teigstreifen sich durch das Verdrillen leicht verlängern, können die Teigstreifen dadurch entlang einer Geraden ausgerichtet werden. Dies hat den Vorteil, dass die verdrillten Teigstreifen in einer geradlinigen Form weiterverarbeitet werden können.

Es besteht aber auch die Möglichkeit, dass die Teigstreifen bereits während dem Verdrillen gestreckt werden. Dazu sollten die Greifeinheiten der mindestens einen Verdrillanordnung jedoch während des Verdrillens auseinander bewegt werden.

Alternativ dazu kann auch auf das Strecken der Teigstreifen verzichtet werden, sei es, weil es nicht nötig ist oder sei es, weil eine nachgeordnete, separate Vorrichtung dies erledigt.

Vorzugsweise wird der mindestens eine Teigstreifen nach dem Verdrillen auf ein Backblech oder ein weiteres Transportband abgelegt. Dabei kann es sich um den ursprünglichen oder um einen neuen Träger des mindestens einen Teigstreifens handeln. Das Ablegen auf ein Backblech hat den Vorteil, dass die verdrillten Teigstreifen direkt in einen Backofen geschoben oder für eine Zwischenlagerung, beispielsweise für die Teigentwicklung oder zur Gärung in einem Zwischenlager abgestellt werden können. Das Ablegen auf ein weiteres Transportband hat den Vorteil, dass die verdrillten Teigstreifen auf einfache Art und Weise zu einer weiteren Vorrichtung zur Weiterverarbeitung wie zum Beispiel zum Zerschneiden in Stücke einer bestimmten Länge transportiert werden können.

Falls die Teigstreifen bereits auf einem Transportband zu der mindestens einen Verdrillanordnung geführt wurden, so können die verdrillten Teigstreifen auch auf demselben Transportband weitergefördert werden, wie sie bereits zum Verdrillen geführt wurden. Alternativ dazu können die verdrillten Teigstreifen aber auch auf einem anderen Träger abgelegt werden.

Falls der mindestens eine Teigstreifen nach dem Verdrillen auf ein Backblech abgelegt wird, so wird er vorzugsweise angedrückt, um ein Wegrollen zu verhindern. Dies hat den Vorteil, dass das Backblech direkt in einen Backofen geschoben oder für eine Zwischenlagerung, beispielsweise für die Teigentwicklung oder zur Gärung in einem Zwischenlager abgestellt werden kann, ohne dass die darauf liegenden Teigstreifen ihre Position verändern. Dadurch wird die Handhabung der verdrillten Teigstreifen vereinfacht. Weiter hat dieses Verhindern des Wegrollens den Vorteil, dass die Teigstreifen nach dem Verdrillen maschinell in eine bestimmte Länge geschnitten werden können, wobei die Schnittwinkel und die Schnittpositionen einfach kontrollierbar sind, da die Positionen und Ausrichtungen der Teigstreifen vordefiniert sind. Zudem wird durch das Andrücken auch ein Zusammenrollen sowie Zusammenkleben der verdrillten Teigstreifen verhindert. Dies führt zu besseren Backeigenschaften, als wenn die verdrillten Teigstreifen zusammenkleben. Entsprechend kann dadurch die Qualität der Backprodukte erhöht werden.

Alternativ dazu kann auch darauf verzichtet werden, die verdrillten Teigstreifen anzudrücken.

Bevorzugt sind die wenigstens zwei Greifeinheiten der mindestens einen Verdrillanordnung ausgebildet um den mindestens einen Teigstreifens zu greifen und anzuheben. Das bedeutet, dass der mindestens eine Teigstreifen nach dem Greifen von den wenigstens zwei Greifeinheiten nach oben vom Träger abhebbar ist. Dies hat den Vorteil, dass der mindestens eine Teigstreifen zum Verdrillen angehoben werden kann und entsprechend beim Verdrillen keinen Kontakt mit dem Träger hat. Dadurch wird ein kontrollierteres Verdrillen des mindestens einen Teigstreifens ermöglicht. Es besteht aber auch die Möglichkeit, dass der mindestens eine Teigstreifen von den wenigstens zwei Greifeinheiten der mindestens einen Verdrillanordnung nur greifbar, nicht aber anhebbar ist.

Vorzugsweise ist die Vorrichtung zum maschinellen Verdrillen von Teigstreifen modular aufbaubar und entsprechend den momentanen Bedürfnissen anpassbar. Bevorzugt ist die Vorrichtung derart ausgebildet, dass die Anzahl der entlang der im Wesentlichen geraden Linie angeordneten Greifeinheiten variierbar ist. Dadurch kann beispielsweise die Regelmässigkeit der Verdrillung der Teigstreifen durch die Anzahl der Greifeinheiten optimiert werden. Insbesondere kann durch die Anzahl der Greifeinheiten die Stärke der Verdrillung bei gleichbleibender Regelmässigkeit der Verdrillung angepasst werden. Durch mehrere Greifeinheiten kann aber auch erreicht werden, dass die Teigstreifen kontrolliert unregelmässig, beispielsweise von ihrem einen Ende zu ihrem anderen Ende hin zunehmend verdrillbar sind. Ausserdem kann dadurch die Vorrichtung für das maschinelle Verdrillen von Teigstreifen mit unterschiedlichen Längen angepasst werden. Weiter ist die Vorrichtung bevorzugt derart ausgebildet, dass die Anzahl der Verdrillanordnungen variierbar ist, indem Greifeinheiten entlang mehrerer im Wesentlichen geraden Linien anordenbar sind und dadurch mehrere Verdrillanordnungen umfasst. Dadurch kann beispielsweise die Produktionskapazität der Vorrichtung gesteigert werden, indem mehrere Teigstreifen gleichzeitig verdrillbar sind.

Vorzugsweise umfassen in der Vorrichtung zum maschinellen Verdrillen von Teigstreifen die wenigstens zwei Greifeinheiten je zwei Finger zum Greifen des mindestens einen Teigstreifens. Mit zwei Fingern sind hier zwei längliche Einheiten gemeint, zwischen welchen der mindestens eine Teigstreifen in Querrichtung zu den länglichen Elementen ausgerichtet Platz hat und von welchen der mindestens eine Teigstreifen greifbar ist. Dabei können die Finger ähnlich zu menschlichen Fingern gelenkig mit Zwischengelenken ausgebildet sein. Sie können aber auch als starre längliche Einheiten ausgebildet sind, wobei sie aber relativ zueinander schwenkbar und/oder aufeinander zu- und voneinander wegbewegbar sind und dadurch ein Greifen des mindestens einen Teigstreifens ermöglichen.

Weiter besteht aber auch die Möglichkeit, dass die wenigstens zwei Greifeinheiten mehr als zwei solche Finger umfassen. Genauso besteht aber auch die Möglichkeit, dass die wenigstens zwei Greifeinheiten nur einen solchen Finger umfassen. In diesem Fall sollten die wenigstens zwei Greifeinheiten aber ein Gegenstück umfassen, damit sie den mindestens einen Teigstreifen mit dem Finger und dem Gegenstück greifen können. Dabei kann das Gegenstück als fingerähnliche, starre Einheit ausgebildet sein, welche starr an der entsprechenden Greifeinheit angeordnet ist. Es besteht aber auch die Möglichkeit, dass das Gegenstück nicht fingerähnlich ausgebildet ist. So kann das Gegenstück beispielsweise als Platte ausgebildet sein, welche eine Fläche umfasst, die entlang der im Wesentlichen geraden Linie, entlang welcher die wenigstens zwei Greifeinheiten der Verdrillanordnung angeordnet sind, ausgerichtet ist. In diesem Fall genügt es, wenn die wenigstens eine Greifeinheit den mindestens einen Teigstreifen zwischen einem einzelnen oder mehreren Fingern der Greifeinheit und dem Gegenstück greifen und halten kann. Das Gegenstück kann dabei an der entsprechenden Greifeinheit angeordnet sein. Es besteht aber auch die Möglichkeit, dass das Gegenstück nicht an der entsprechenden Greifeinheit angeordnet ist, sondern von der mindestens einen Verdrillanordnung beinhaltet ist. In diesem Fall kann sich das Gegenstück auch über eine gesamte Länge der Verdrillanordnung erstrecken, wobei sich diese Länge über alle der wenigstens zwei entlang der im Wesentlichen geraden Linie angeordneten Greifeinheiten erstreckt. Entsprechend können einzelne oder alle der wenigsten zwei Greifeinheiten den mindestens einen Teigstreifen zwischen ihren jeweiligen Fingern und diesem einen Gegenstück greifen und festhalten.

Als Alternative dazu können die wenigstens zwei Greifeinheiten auch eine andere Vorrichtung als Finger zum Greifen des mindestens einen Teigstreifens umfassen.

Vorzugsweise ist der mindestens eine Teigstreifen von den zwei Fingern der wenigstens zwei Greifeinheiten drehbar. Dabei ist zu beachten, dass der mindestens eine Teigstreifen von den wenigstens zwei Greifeinheiten unterschiedlich drehbar ist. So kann der Teigstreifen zwar von den wenigstens zwei Greifeinheiten in gleicher Drehrichtung, aber mit anderer Drehgeschwindigkeit drehbar sein. Der Teigstreifen kann aber auch von den wenigstens zwei Greifeinheiten in unterschiedlicher Drehrichtung drehbar sein. Dabei kann er mit gleicher oder mit unterschiedlicher Drehgeschwindigkeit drehbar sein.

Es ist zu beachten, dass es bei der Drehbarkeit des mindestens einen Teigstreifens durch die wenigstens zwei Greifeinheiten darauf ankommt, dass der Teigstreifen von den Greifeinheiten unterschiedlich drehbar ist. Entsprechend kann der Teigstreifen auch von einer der wenigstens zwei Greifeinheiten nicht drehbar sein, während er von der oder den anderen der wenigstens zwei Greifeinheiten drehbar ist.

Weiter ist zu beachten, dass, falls die wenigstens zwei Greifeinheiten nur einen Finger oder aber mehr als zwei Finger umfassen, vorzugsweise der mindestens eine Teigstreifen genauso von den wenigstens zwei Greifeinheiten drehbar ist, wie er es ist, falls die wenigstens zwei Greifeinheiten zwei Finger umfassen.

Vorteilhafterweise umfasst die mindestens eine Verdrillanordnung mehr als zwei Greifeinheiten. Vorzugsweise umfasst sie vier, sechs oder mehr Greifeinheiten. Es besteht aber auch die Möglichkeit, dass die mindestens eine Verdrillanordnung zwei Greifeinheiten umfasst. Weiter besteht die Möglichkeit, dass die mindestens eine Verdrillanordnung drei, fünf oder mehr Greifeinheiten umfasst.

Bevorzugt umfassen die beiden Finger der wenigstens zwei Greifeinheiten je eines, vorzugsweise aber zwei, drei oder mehr Endlosbänder, welche durch einen steuerbaren Antrieb betätigbar sind. Es besteht aber auch die Möglichkeit, dass nur einer der beidem Finger der wenigstens zwei Greifeinheiten eines, vorzugsweise aber zwei, drei oder mehr antreibbare Endlosbänder umfasst. Falls die wenigstens zwei Greifeinheiten nur einen Finger umfassen, so umfasst dieser Finger bevorzugt eines, vorzugsweise aber zwei, drei oder mehr antreibbare Endlosbänder. Falls die wenigstens zwei Greifeinheiten hingegen mehr als zwei Finger umfassen, so umfassen diese Finger bevorzugt eines, vorzugsweise aber zwei, drei oder mehr antreibbare Endlosbänder. In diesem letztgenannten Fall besteht aber auch die Möglichkeit, dass nur diejenigen Finger, welche beim Greifen des mindestens einen Teigstreifens auf einer gleichen Seite des Teigstreifens liegen, eines, vorzugsweise aber zwei, drei oder mehr antreibbare Endlosbänder umfassen.

Falls ein Finger mehr als ein Endlosband umfasst, so sind vorzugsweise diese Endlosbänder des Fingers mit unterschiedlicher Geschwindigkeit antreibbar. Dabei ist der Geschwindigkeitsunterschied zwischen den Endlosbändern vorzugsweise derart gewählt, dass der Teigstreifen, welcher durch die Verdrillanordnung verdrillt wird, auch durch die unterschiedlichen Endlosbänder derart unterschiedlich drehbar ist, dass er zwischen den unterschiedlichen Endlosbändern entsprechend seiner Verdrillung regelmässig verdrillbar ist. Dies hat den Vorteil, dass durch die mehreren Endlosbänder mehr Kontaktfläche zum zu verdrillenden Teigstreifen besteht, dass aber gleichzeitige eine regelmässige Verdrillung der Teigstreifen ermöglicht wird.

Als Variante dazu besteht auch die Möglichkeit, dass keiner der Finger der wenigstens zwei Greifeinheiten ein Endlosband umfasst. In diesem Fall können die Finger beispielsweise wie menschliche Finger Zwischengelenke umfassen. Dadurch kann der wenigstens eine Teigstreifen durch Bewegung der Zwischengelenke der Finger drehbar sein. Es besteht in diesem Fall aber auch die Möglichkeit, dass die beiden Finger jeweils starr ausgebildet sind und in ihrer Längsrichtung relativ zueinander bewegbar sind, wodurch ein sich zwischen den beiden Fingern der Greifeinheiten befindender Teigstreifen gedreht werden kann. Weiter besteht in diesem Fall auch die Möglichkeit, dass die beiden Finger jeweils starr ausgebildet sind und in ihrer Längsrichtung zwei nebeneinander angeordnete Rollen umfassen. Dabei können die Rollen der beiden Finger derart angeordnet sein, dass Ihre Achsen parallel zur Längsachse der zu verdrillenden Teigstreifen ausgerichtet sind und dass ein Teigstreifen zwischen den insgesamt vier Rollen der beiden Finger pro Greifeinheit gehalten werden kann, sodass ein Teigstreifen durch ein Antreiben der Rollen gedreht werden kann.

Vorteilhafterweise verlaufen die Endlosbänder der Finger entlang einer Länge der Finger und sind mit einer Hauptlauffläche zum anderen Finger der entsprechenden Greifeinheit ausgerichtet, wobei die Greifersteuerung ausgebildet ist, um die Endlosbänder der beiden Finger gleichsinnig umlaufen zu lassen, um den Teigstreifen zwischen den Fingern zu drehen. Dies hat den Vorteil, dass wenn die Endlosbänder der beiden Finger mit gleicher Geschwindigkeit gedreht werden, der Teigstreifen zwischen den beiden Fingern drehbar ist und dabei an einer gleichen Position zwischen den Fingern bleibt. Wenn die Endlosbänder der beiden Finger unterschiedliche Drehgeschwindigkeiten aufweisen, so verschiebt sich der Teigstreifen zwischen den Fingern, während er gedreht wird. Dieser Effekt ist beispielsweise auch zum Greifen des mindestens einen Teigstreifens durch die wenigstens zwei Greifeinheiten verwendbar. Zum Greifen des mindestens einen Teigstreifens können die Endlosbänder der beiden Finger aber auch in Gegenrichtung drehbar sein, so dass der mindestens eine Teigstreifen von den Endlosbändern zwischen die beiden Finger gezogen wird. Dies hat den Vorteil, dass der mindestens eine Teigstreifen einerseits auf einfache Art und Weise von den wenigstens zwei Greifeinheiten greifbar ist und nach dem Greifen auf einfache Art und Weise von den Fingern drehbar ist, indem die Endlosbänder der beiden Finger in gleicher Richtung gedreht werden.

Falls ein Finger mehr als ein Endlosband umfasst, so sind vorzugsweise diese Endlosbänder des Fingers mit unterschiedlicher Geschwindigkeit antreibbar. Dabei ist der Geschwindigkeitsunterschied zwischen den Endlosbändern vorzugsweise derart gewählt, dass der Teigstreifen, welcher durch die Verdrillanordnung verdrillt wird, auch durch die unterschiedlichen Endlosbänder derart unterschiedlich drehbar ist, dass er zwischen den unterschiedlichen Endlosbändern entsprechend seiner Verdrillung regelmässig verdrillbar ist. Dies hat den Vorteil, dass durch die mehreren Endlosbänder mehr Kontaktfläche zum zu verdrillenden Teigstreifen besteht, dass aber gleichzeitige eine regelmässige Verdrillung der Teigstreifen ermöglicht wird.

Falls die wenigstens zwei Greifeinheiten mehr oder weniger als zwei Finger umfassen, so verlaufen vorteilhafterweise zumindest die Endlosbänder derjenigen Finger, welche sich beim Greifen des mindestens einen Teigstreifens auf einer Seite des Teigstreifens befinden, entlang einer Länge der entsprechenden Finger und sind mit einer Hauptlauffläche zum gegenüberliegenden Finger oder dem Gegenstück der entsprechenden Greifeinheit ausgerichtet. Diese Ausführung hat ebenfalls den Vorteil, dass der mindestens eine Teigstreifen von den wenigstens zwei Greifeinheiten greifbar und drehbar ist.

Diese Ausführungsformen haben den Vorteil, dass der mindestens eine Teigstreifen von den wenigstens zwei Greifeinheiten unterschiedlich drehbar ist, indem die Endlosbänder der Finger der verschiedenen Greifeinheiten mit unterschiedlicher Geschwindigkeit antreibbar sind.

Wie bereits erwähnt, kann der mindestens eine Teigstreifen nach dem Verdrillen von den wenigstens zwei Greifeinheiten etwas zurückgedreht werden, damit der Teigstreifen sich aufgrund der Elastizität des Teigs nach dem Verdrillen nicht unkontrolliert zurückdreht. Das Verlaufen der Endlosbänder der Finger der wenigstens zwei Greifeinheiten entlang einer Länge der Finger ist hierzu geeignet. Deshalb sind die Endlosbänder vorzugsweise nach dem Verdrillen des mindestens einen Teigstreifens etwas zurückdrehbar.

Bevorzugt ist wenigstens einer der beiden Finger der Greifeinheiten schwenkbar an einem Körper der entsprechenden Greifeinheit gelagert und durch eine Feder mit einer vordefinierten Federkraft gegen den zweiten Finger vorgespannt. Es besteht aber auch die Möglichkeit, dass beide Finger der Greifeinheiten schwenkbar am Körper der entsprechenden Greifeinheit gelagert sind. In diesem Fall können nur einer oder auch beide Finger mit einer vordefinierten Federkraft gegen den jeweils gegenüberliegenden Finger vorgespannt sein. Falls die wenigstens zwei Greifeinheiten nur einen oder aber mehr als zwei Finger umfassen, so besteht die Möglichkeit, dass der oder die Finger, welche sich beim Greifen des mindestens einen Teigstreifens auf einer gleichen Seite des Teigstreifens befinden, schwenkbar am Körper der entsprechenden Greifeinheit gelagert sind und mit einer vordefinierten Federkraft gegen die andere Seite des Teigstreifens vorgespannt sind. Bei mehreren Fingern besteht aber auch die Möglichkeit, dass alle Finger schwenkbar am Körper der entsprechenden Greifeinheit gelagert sind und mit einer vordefinierten Federkraft gegen die jeweils andere Seite des Teigstreifens vorgespannt sind. Diese Ausführungsformen haben den Vorteil, dass der mindestens eine Teigstreifen nach dem Greifen von der vordefinierten Federkraft zwischen den Fingern gehalten wird. Vorteilhafterweise ist an einem Körper der entsprechenden Greifeinheit eine Parallellagerung der beiden Finger vorgesehen, um die Finger parallel zueinander ausgerichtet und in einem variablen gegenseitigen Abstand beweglich gelagert, wobei wenigstens einer der beiden Finger auf den anderen zu oder vom anderen weg bewegbar ist und durch eine Feder mit einer vordefinierten Federkraft gegen den anderen Finger vorgespannt ist. Es besteht aber auch die Möglichkeit, dass beide Finger der Greifeinheiten parallel zueinander ausgerichtet sind und beide Finger auf den jeweils anderen zu oder vom anderen weg bewegbar sind und durch eine Feder mit einer vordefinierten Federkraft gegen den jeweils anderen Finger vorgespannt sind. Falls die wenigstens zwei Greifeinheiten nur einen Finger umfassen, so besteht die Möglichkeit, dass der Finger, parallel auf das Gegenstück zu oder von diesem weg bewegbar ist und durch eine Feder mit einer vordefinierten Federkraft gegen das Gegenstück vorgespannt ist. Falls die wenigstens zwei Greifeinheiten mehr als zwei Finger umfassen, so besteht zudem die Möglichkeit, dass die Finger parallel ausgerichtet sind und zumindest diejenigen Finger, welche sich auf einer Seite des Teigstreifens befinden, parallel auf die Finger, welche sich auf der anderen Seite des Teigstreifens befinden, zu oder vom diesen weg bewegbar sind und durch eine Feder mit einer vordefinierten Federkraft gegen die gegenüberliegenden Finger vorgespannt sind. Diese Ausführungsformen haben den Vorteil, dass der mindestens eine Teigstreifen nach dem Greifen von der vordefinierten Federkraft zwischen den Fingern gehalten wird. Insbesondere hat die parallele Bewegung der Finger den Vorteil, dass bei gegriffenem Teigstreifen eine Distanz zwischen den Fingern unabhängig von einer Position des Teigstreifens entlang der Finger ist. Entsprechend wird durch diese parallele Bewegung eine sehr kontrollierte Krafteinwirkung auf den Teigstreifen ermöglicht, da die vordefinierte Federkraft, welche abhängig von der Distanz zwischen den Fingern ist, unabhängig von der Position des Teigstreifens entlang der Finger ist.

Alternativ dazu besteht aber auch die Möglichkeit, dass die Finger nicht durch eine vordefinierte Federkraft vorgespannt sind. So können die Finger beispielsweise auch durch ein Eigengewicht gegeneinander gedrückt werden. Des Weiteren besteht auch die Möglichkeit, dass die Finger andersartig aufeinander zu- und voneinander wegbewegbar sind. Auch besteht die Möglichkeit, dass die Finger gar nicht aufeinander zu- und voneinander wegbewegbar sind, sondern in einem starren Abstand zueinander angeordnet sind.

Vorzugsweise umfasst die Vorrichtung einen als Transportband ausgebildeten Träger, auf welchem der mindestens eine Teigstreifen transportierbar ist. Dies hat den Vorteil, dass der mindestens eine Teigstreifen automatisch zur mindestens einen Verdrillanordnung förderbar ist. Alternativ dazu besteht aber auch die Möglichkeit, dass die Vorrichtung kein Transportband umfasst. So können die Teigstreifen der Vorrichtung beispielsweise auch auf einem als Backblech ausgebildeten Träger zugeführt werden.

Bevorzugt ist die im Wesentlichen gerade Linie, entlang welcher die wenigstens zwei Greifeinheiten der mindestens einen Verdrillanordnung angeordnet sind, quer zum Transportband ausgerichtet. Dies hat den Vorteil, dass quer zum Transportband liegende Teigstreifen von der mindestens einen Verdrillanordnung greifbar und verdrillbar sind. Weiter hat dies den Vorteil, dass ein Teigband auf dem Transportband transportierbar ist, welches quer zum Transportband in Teigstreifen trennbar ist, wobei die Teigstreifen danach von der mindestens einen Verdrillanordnung greifbar und verdrillbar sind. Es besteht aber auch die Möglichkeit, dass die im Wesentlichen gerade Linie, entlang welcher die wenigstens zwei Greifeinheiten der mindestens einen Verdrillanordnung angeordnet sind, parallel oder in einem anderen Winkel zum Transportband angeordnet ist.

Als Alternative kann auch eine Ausrichtung der mindestens einen Verdrillanordnung zum Transportband einstellbar sein. Dies hat den Vorteil, dass die Verdrillanordnung einer Ausrichtung des mindestens einen Teigstreifens auf dem Transportband anpassbar ist. Eine einstellbare Ausrichtung der mindestens einen Verdrillanordnung ist insbesondere auch dann vorteilhaft, wenn die Vorrichtung kein Transportband umfasst, sondern wenn die Teigstreifen der Vorrichtung beispielsweise auf Backblechen zugeführt werden. In diesem Fall kann die Ausrichtung der Teigstreifen auf den Backblechen oder gar die Ausrichtung der Backbleche variieren. Dadurch ist eine individuell anpassbare Ausrichtung der Verdrillanordnung zu den Teigstreifen äusserst vorteilhaft. Diese kann beispielsweise dadurch erreicht werden, dass die Vorrichtung wenigstens einen Sensor umfasst, durch welchen die Ausrichtung des zu greifenden Teigstreifens erfassbar ist und dass die Vorrichtung eine Steuereinheit umfasst, durch welche die Ausrichtung der mindestens einen Verdrillanordnung entsprechend der Ausrichtung des zu greifenden Teigstreifens anpassbar ist.

Vorteilhafterweise umfasst die Vorrichtung eine Absenkvorrichtung, durch welche die mindestens eine Verdrillanordnung absenkbar und hochhebbar ist. Es besteht aber auch die Variante, dass die mindestens eine Verdrillanordnung eine Absenkvorrichtung umfasst oder dass jede der wenigstens zwei Greifeinheiten der mindestens einen Verdrillanordnung eine Absenkvorrichtung umfasst. Bei diesen Varianten ist wichtig, dass die wenigstens zwei Greifeinheiten der mindestens einen Verdrillanordnung absenkbar und hochhebbar sind. Dadurch wird ermöglicht, dass die Greifeinheiten den wenigstens einen Teigstreifen auf einfache Art und Weise greifen und hochheben können.

Als weitere Variante dazu besteht auch die Möglichkeit, dass ein Abstand zwischen den wenigstens zwei Greifeinheiten der mindestens einen Verdrillanordnung variierbar ist. Dadurch können die wenigstens zwei Greifeinheiten den mindestens einen Teigstreifen von seinen beiden Enden her greifen.

Als Variante dazu besteht die Möglichkeit, dass der mindestens eine Teigstreifen vom Transportband am Ende des Transportbands an die wenigstens zwei Greifeinheiten der mindestens einen Verdrillanordnung übergebbar ist, wodurch zum Greifen des mindestens einen Teigstreifens keine Bewegung der Greifeinheiten oder der mindestens einen Verdrillanordnung benötigt wird.

Als weitere Variante dazu besteht aber auch die Möglichkeit, dass das Transportband absenkbar ist, wodurch zum Greifen des mindestens einen Teigstreifens keine Bewegung der Greifeinheiten oder der mindestens einen Verdrillanordnung benötigt wird.

Vorzugsweise sind die beiden Finger der wenigstens zwei Greifeinheiten mit ihren freien Enden nach unten ausgerichtet und durch die Absenkvorrichtung auf das Transportband senkbar, um den mindestens einen Teigstreifen durch die Finger vom Transportband abzuheben. Dies hat den Vorteil, dass der mindestens eine Teigstreifen auf einfache Art und Weise vom Transportband hochhebbar ist. Es ist zu bemerken, dass diese Ausrichtung der Finger nach unten auch dann vorteilhaft ist, wenn die wenigstens zwei Greifeinheiten mehr oder weniger als zwei Finger umfassen.

Als Variante dazu besteht auch die Möglichkeit, dass die beiden Finger der wenigstens zwei Greifeinheiten mit ihren freien Enden in einem Winkel zum Transportband ausgerichtet sind und durch die Absenkvorrichtung derart auf das Transportband senkbar sind. Dies hat ebenfalls den Vorteil, dass der mindestens eine Teigstreifen auf einfache Art und Weise vom Transportband hochhebbar ist. Es ist auch hier zu bemerken, dass diese Ausrichtung der Finger in einem Winkel zum Transportband auch dann vorteilhaft ist, wenn die wenigstens zwei Greifeinheiten mehr oder weniger als zwei Finger umfassen.

Falls die Vorrichtung kein Transportband umfasst und die Teigstreifen der mindestens einen Verdrillanordnung auf andere Art und Weise zugeführt werden wie beispielsweise auf einem Backblech liegend, so sind die Finger der wenigstens zwei Greifeinheiten vorteilhafterweise ebenfalls entweder mit ihren freien Enden nach unten oder in einem Winkel zum Backblech ausgerichtet und durch die Absenkvorrichtung derart auf das Backblech senkbar, dass der mindestens eine Teigstreifen durch die Finger vom Backblech hochhebbar ist.

Alternativ dazu besteht auch die Möglichkeit, dass die Finger der wenigstens zwei Greifeinheiten anders ausgerichtet sind und/oder dass die Greifeinheiten nicht absenkbar sind. Beispielsweise können die Finger horizontal ausgerichtet sein um die Teigstreifen an einem Ende eines Transportbandes zu übernehmen oder sie können senkrecht oder in einem Winkel nach oben ausgerichtet sein um die Teigstreifen an einem Ende eines Transportbandes zu übernehmen.

Vorzugsweise ist der mindestens eine Teigstreifen hochhebbar, indem die Endlosbänder der Finger gegenläufig angetrieben werden. Dies hat den Vorteil, dass der mindestens eine Teigstreifen auf einfache Art und Weise hochhebbar ist.

Als Variante dazu besteht aber auch die Möglichkeit, dass der mindestens eine Teigstreifen durch eine Greifbewegung der Finger greifbar und hochhebbar ist.

Vorteilhafterweise ist eine in Längsrichtung des Transportbandes bewegbare Haltevorrichtung vorgesehen, um die mindestens eine Verdrillanordnung synchron mit dem Transportband mit einer Fördergeschwindigkeit des Transportbands entlang einer Förderrichtung des Transportbands zu bewegen, wobei gleichzeitig der mindestens ein Teigstreifen hochhebbar, in einem hochgehobenen Zustand verdrillbar und nach dem Verdrillen an einer ursprünglichen Position auf dem Transportband deponierbar ist. Dies hat den Vorteil, dass der hochgehobene, mindestens eine Teigstreifen nicht über andere Teigstreifen, welche möglicherweise auf dem Transportband gefördert werden, bewegt wird. Dadurch kann eine Anordnung der Teigstreifen auf dem Transportband beibehalten werden. Dies ermöglicht eine dichte Anordnung von Teigstreifen auf dem Transportband und entsprechend eine erhöhte Produktionszahl von verdrillten Teigstreifen.

Vorzugsweise ist die mindestens eine Verdrillanordnung mit einer Geschwindigkeit, welche grösser als die Fördergeschwindigkeit des Transportbands ist, entgegen einer Förderrichtung des Transportbands bewegbar. Dies hat den Vorteil, dass die mindestens eine Verdrillanordnung, wenn sie während des Hochhebens, Verdrillens und Deponierens des mindestens einen Teigstreifens entlang dem Transportband bewegt wird, wieder an ihre Ursprungsposition entlang dem Transportband bewegbar ist. Aufgrund der erhöhten Geschwindigkeit hat dies insbesondere auch den Vorteil, dass die Fördergeschwindigkeit des Transportbands erhöht werden kann, wodurch die Produktionskapazität erhöht werden kann.

Als Variante dazu besteht auch die Möglichkeit, dass die mindestens eine Verdrillanordnung mit einer geringeren Geschwindigkeit entgegen einer Förderrichtung des Transportbands bewegbar ist.

Alternativ dazu kann die mindestens eine Verdrillanordnung auch fest und nicht englang dem Transportband bewegbar angeordnet sein.

Vorteilhafterweise umfasst die Vorrichtung mehr als eine Verdrillanordnung, wobei die Verdrillanordnungen derart angeordnet sind, dass die im Wesentlichen geraden Linien, entlang welchen die wenigstens zwei Greifeinheiten der Verdrillanordnungen angeordnet sind, parallel zueinander ausgerichtet sind. Dies hat den Vorteil, dass pro Verdrillanordnung ein Teigstreifen verdrillbar ist und dass aufgrund der parallelen Anordnung der Verdrillanordnungen mehrere parallel angeordnete Teigstreifen greifbar und verdrillbar sind. Durch die parallele Anordnung der Teigstreifen wird zudem eine automatische Produktion vereinfacht und die Produktionskapazität kann erhöht werden, weil die Teigstreifen näher zueinander lagerbar sind. Zudem kann durch die gleichzeitige Verdrillung von mehreren Teigstreifen die Produktionskapazität weiter erhöht werden.

Als Variante dazu kann die Vorrichtung auch mehr als eine Verdrillanordnung umfassen, wobei die im Wesentlichen geraden Linien, entlang welchen die wenigstens zwei Greifeinheiten der Verdrillanordnungen angeordnet sind, in einem Winkel zueinander ausgerichtet sind. Auch können als Variante die Verdrillanordnungen in ihrer Ausrichtung relativ zueinander anpassbar sein. Dies ist insbesondere dann vorteilhaft, wenn beispielsweise unregelmässig ausgerichtete Teigstreifen gegriffen und verdrillt werden sollten. In diesem Fall kann beispielsweise jede der Verdrillanordnungen einen Sensor und eine Steuereinheit umfassen, wobei durch den Sensor eine Ausrichtung des zu greifenden Teigstreifens erfassbar ist und die entsprechende Verdrillanordnung durch die Steuereinheit entsprechend der Ausrichtung des zu greifenden Teigstreifens ausrichtbar ist.

Alternativ dazu besteht aber auch die Möglichkeit, dass die Vorrichtung nur eine Verdrillanordnung umfasst. Dies hat den Vorteil, dass die Vorrichtung wenig komplex und entsprechend günstig in der Herstellung ist.

Vorzugsweise sind Greifeinheiten, welche zu verschiedenen Verdrillanordnungen gehören, aber an einer selben Position entlang der im Wesentlichen geraden Linie angeordnet sind, entlang welcher die wenigstens zwei Greifeinheiten der jeweiligen Verdrillanordnung angeordnet sind, durch eine Getriebestange verbunden und gemeinsam antreibbar. Dabei sind die entsprechenden Getriebestangen jeweils durch einen Motor antreibbar. Dies hat den Vorteil, dass nicht für jede einzelne Greifeinheit ein separater Antriebsmotor benötigt wird. Dadurch werden die Produktionskosten für die Vorrichtung reduziert. Zudem hat dies den Vorteil, dass durch die verschiedenen Verdrillanordnungen mehrere Teigstreifen gleich stark verdrillbar sind.

Alternativ dazu besteht auch die Möglichkeit, dass Greifeinheiten, welche zu verschiedenen Verdrillanordnungen gehören, aber an einer selben Position entlang der im Wesentlichen geraden Linien angeordnet sind, entlang welchen die wenigstens zwei Greifeinheiten der jeweiligen Verdrillanordnung angeordnet sind, nicht durch eine Getriebestange verbunden und gemeinsam antreibbar sind. Dies hat den Vorteil, dass die Vorrichtung besser anpassbar ist. So können beispielsweise durch mehrere Verdrillanordnungen mehrere Teigstreifen gleichzeitig unterschiedlich verdrillt werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1a, b: Zwei Schrägansichten einer Anlage, welche eine Vorrichtung zum maschinellen Verdrillen von Teigstreifen beinhaltet,
- Fig. 2: einen Ausschnitt einer Schrägansicht der Anlage,
- Fig. 3: eine Schrägansicht einer Vorrichtung zum maschinellen Verdrillen von Teigstreifen,
- Fig. 4: eine weitere Schrägansicht der Vorrichtung zum maschinellen Verdrillen von Teigstreifen,
- Fig. 5: eine Schrägansicht einer Greifeinheit,
- Fig. 6: eine Schrägansicht einer weiteren Greifeinheit,
- Fig. 7: eine Schrägansicht der Vorrichtung zum maschinellen Verdrillen von Teigstreifen mit Mechanik zur Bewegung der Vorrichtung
- Fig. 8: eine Schrägansicht der Vorrichtung zum maschinellen Verdrillen von Teigstreifen mit Mechanik sowie Antrieben zur Bewegung der Vorrichtung,
- Fig. 9: eine Schrägansicht einer Schneidanlage,
- Fig. 10: eine schematische Darstellung einer weiteren Vorrichtung zum maschinellen Verdrillen von Teigstreifen,
- Fig. 11a, b: zwei weitere schematische Darstellungen von weiteren Vorrichtungen zum maschinellen Verdrillen von Teigstreifen,
- Fig 12a, b, c: drei schematische Darstellungen einer weiteren Greifeinheit und
- Fig 13a, b: zwei schematische Darstellungen jeweils zweier Greifeinheiten und eines Teigstreifens zur Illustration einer Greifrichtung der Greifeinheiten.

Grundsätzlich sind in den Figuren gleiche Teile mit gleichen Bezugszeichen versehen.

### Wege zur Ausführung der Erfindung

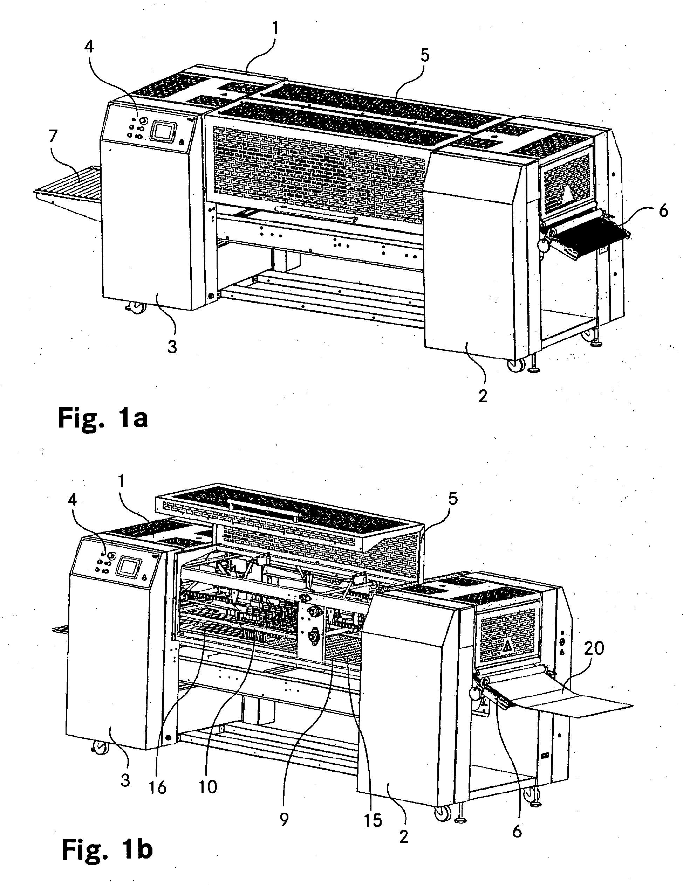

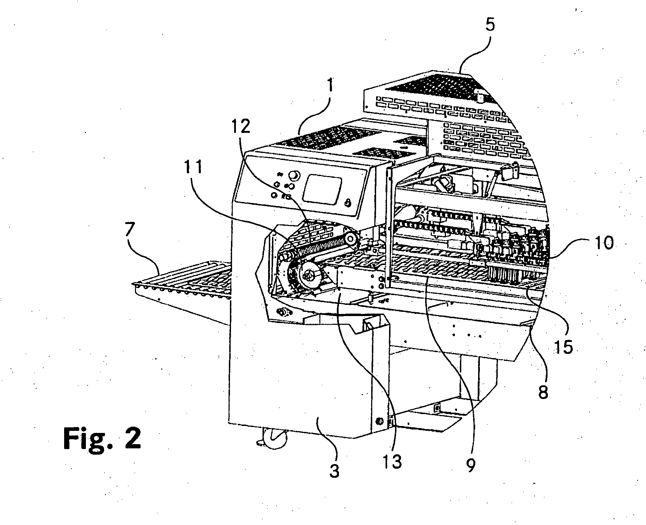

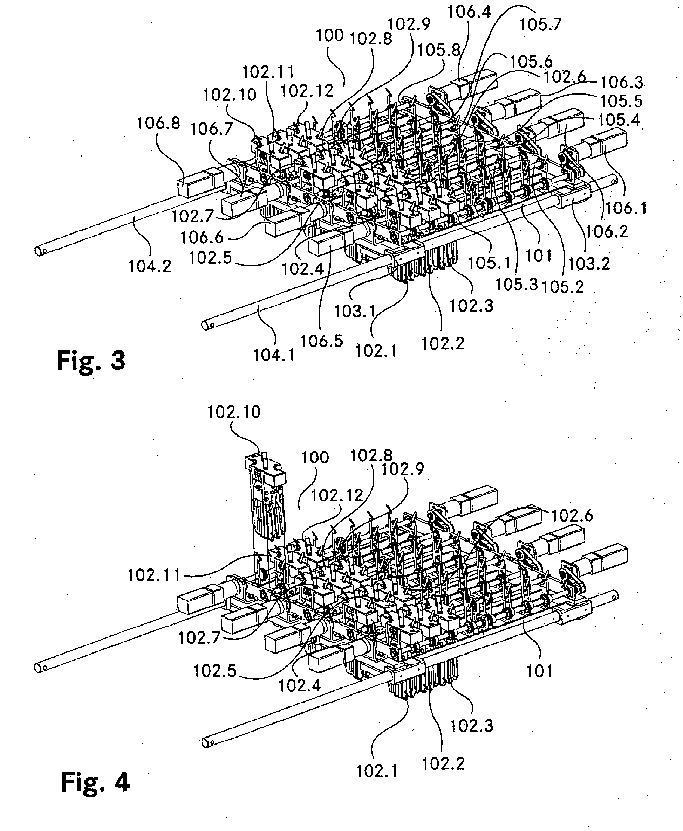

Figuren 1a und 1b zeigen je eine Schrägansicht einer Anlage 1 zum maschinellen Verdrillen von Teigstreifen. Die Anlage 1 ist länglich und umfasst ein erstes Ende und ein zweites Ende. In einem Bereich des ersten Endes befindet sich ein erster Maschinenkörper 2, während sich in einem Bereich des zweiten Endes ein zweiter Maschinenkörper 3 befindet. Der zweite Maschinenkörper 3 umfasst eine Steuerung 4, über welche die Anlage 1 steuerbar ist. Zwischen dem ersten und dem zweiten Maschinenkörper 2, 3 befindet sich eine vergitterte Abdeckung 5, welche eine Oberseite sowie zwei Seitenwände von einem Tunnel vom ersten Maschinenkörper 2 zum zweiten Maschinenkörper 3 bildet. Die Oberseite ist horizontal ausgerichtet, während die Seitewände vertikal ausgerichtet sind. Die Abdeckung 5 umfasst zwei Teile, welche schwenkbar um eine Achse gelagert sind. Diese Achse verläuft in einer Mitte der Oberseite vom ersten Maschinenkörper 2 zum zweiten Maschinenkörper 3. Beide Teile der Abdeckung 5 sind in einem Bereich der Oberseite sowie im Bereich der jeweiligen Seitenwand mit kleinen Öffnungen versehen. Die Abdeckung 5 schützt eine unterhalb der Abdeckung 5 angeordnete Vorrichtung 10 zum maschinellen Verdrillen von Teigstreifen (siehe dazu auch Figuren 2 und 3). Da beide Teile der Abdeckung 5 seitlich um die Achse hochklappbar sind, ist die Vorrichtung zum maschinellen Verdrillen von Teigstreifen, welche innerhalb der Anlage 1 angeordnet ist, zugänglich. In Figur 1a sind beide Teile der Abdeckung 5 nach unten geklappt. In Figur 1b ist der Teil der Abdeckung 5, welcher dem Betrachter zugewandt ist, hochgeklappt. Dadurch ist die Vorrichtung 10 im innern der Anlage 1 erkennbar.

Am ersten Ende umfasst die Anlage 1 ein erstes Förderband 6. Dieses erste Förderband 6 reicht am ersten Ende der Anlage 1 schräg nach unten zeigend in Längsrichtung aus dem ersten Maschinenkörper 2 aus der Anlage 1 hinaus. Über dieses erste Förderband 6 kann ein Teigband 20 (nur in Figur 1b gezeigt) in die Anlage 1 eingeführt werden. Dazu kann die Anlage 1 mit einer weiteren Anlage (hier nicht gezeigt) verbunden werden. Das Teigband 20 wird über ein Förderband dieser weiteren Anlage zum ersten Förderband 6 der Anlage 1 geführt, welches das Teigband 20 schräg nach oben in eine in Längsrichtung der Anlage 1 ausgerichtete, durchgehende Öffnung im ersten Maschinenkörper 2 führt. An einem oberen Ende des ersten Förderbands 6, welches sich innerhalb der durchgehenden Öffnung im ersten Maschinenkörper 2 befindet, befindet sich eine Anordnung von in Querrichtung zum ersten Förderband 6 ausgerichteten Rollen (hier nicht gezeigt). Das Teigband 20 wird von dieser Rollenanordnung vom oberen Ende des ersten Förderbands 6 leicht nach unten auf ein Transportband 9 geführt. Dieses Transportband 9 bewegt sich mit einer grösseren Geschwindigkeit als das erste Förderband 6 in Längsrichtung der Anlage 1 von der durchgehenden Öffnung im ersten Maschinenkörper 2 zu einer in Längsrichtung der Anlage 1 durch den zweiten Maschinenkörper 3 durchgehende Öffnung. Über einem Bereich vom Transportband 9, in welchem das Teigband 20 auf das Transportband 9 geführt wird, ist ein Messer (hier nicht gezeigt) in Querrichtung zum Transportband 9 angeordnet. Dieses Messer trennt an einem vorderen Ende des Teigbands 20 Teigstreifen 15 ab. Derart nacheinander vom Teigband 20 abgetrennte Teigstreifen 15 werden im Betrieb der Anlage 1 auf dem Transportband 9 voneinander getrennt, da ein abgetrennter Teigstreifen 15 vom Transportband 9 schneller wegtransportiert wird als das Teigband 20 vom ersten Förderband 6 in die Anlage 1 eingeführt wird und als ein jeweils nächster Teigstreifen 15 vom Teigband 20 abgetrennt wird. Kurz nach dem Wegtransport eines abgetrennten Teigstreifens 15 befindet sich eine quer zum Transportband 9 ausgerichtete Barriere (hier nicht gezeigt). Diese Barriere ist bei jedem zur Barriere transportierten Teigstreifen 15 erst auf das Transportband 9 gesenkt. Dadurch wird der Teigstreifen 15 vom bewegten Transportband 9 gegen die Barriere geschoben, wodurch sich der Teigstreifen 15 in Querrichtung zum Transportband 9 ausrichtet. Danach wird die Barriere gehoben und der Teigstreifen 15 passiert auf dem Transportband 9 unterhalb der Barriere hindurch.

Die Teigstreifen 15 werden vom Transportband 9 unter der Abdeckung 5 vom ersten Maschinenkörper 2 zum zweiten Maschinenkörper 3 geführt. Auf diesem Weg werden die Teigstreifen 15 von der erfindungsgemässen Vorrichtung 10, welche über dem Transportband 9 und unter der Abdeckung 5 befindet, vom Transportband 9 gehoben, verdrillt und wieder auf dem Transportband 9 deponiert. Dieser Vorgang ist in den Figuren 3 und 4 genauer beschrieben.

Nachdem die Teigstreifen 15 verdrillt sind und auf dem Transportband 9 weitertransportiert werden, werden die verdrillten Teigstreifen 16 gestreckt. Dazu besteht das Transportband 9 aus mehreren, parallel nebeneinander angeordnete Einzelbänder, welche gegen ein zweites Ende des Transportbands 9 nicht mehr parallel zueinander geführt, sondern leicht aufgefächert werden (hier nicht gezeigt). Es besteht aber auch die Möglichkeit, dass die verdrillten Teigstreifen 16 nicht vom Transportband 9 gestreckt werden, sondern auf ein zweites Förderband übergeben werden, welches aus aufgefächerten Einzelbändern besteht (hier nicht gezeigt). In diesem Fall kann das Transportband 9 auch aus einem einzelnen, breiten Band bestehen.

Figur 2 zeigt einen Ausschnitt einer Schrägansicht der in Figuren 1a und 1b gezeigten Anlage 1. Es ist der Bereich des zweiten Endes der Anlage 1 mit dem zweiten Maschinenkörper 3 gezeigt. Der zweite Maschinenkörper 3 ist teilweise transparent dargestellt, damit der Betrachter in die in Längsrichtung der Anlage 1 durchgehende Öffnung im zweiten Maschinenkörper 3 hineinsehen kann.

Das zweite Ende des Transportbands 9 (oder ein zweites Ende des zweiten Förderbands) befindet sich innerhalb der durchgehenden Öffnung im zweiten Maschinenkörper 3. An diesem zweiten Ende ist in Querrichtung zum Transportband 9 eine Schaufelrolle 11 angeordnet. Diese Schaufelrolle 11 erstreckt sich mit ihrer Länge horizontal ausgerichtet über eine gesamte Breite des Transportbands 9. Dabei ist die Schaufelrolle 11 derart unterhalb des zweiten Endes des Transportbands 9 (oder des zweiten Endes des zweiten Förderbands) angeordnet, dass ein verdrillter Teigstreifen 16, welcher über das zweite Ende des Transportbands 9 hinunterfällt, auf eine Oberseite der Schaufelrolle 11 fällt. Da eine Oberfläche der Schaufelrolle 11 nicht zylinderförmig rund ist, sondern in Längsrichtung ausgerichtete Schaufeln aufweist, fällt dieser Teigstreifen 16 in eine Ausbuchtung zwischen zwei Schaufeln. Die Schaufelrolle 11 dreht sich nun um ihre rotationssymmetrische Achse und befördert den Teigsteifen 16 nach unten. Dabei werden die Räume zwischen den Schaufeln der Schaufelrolle 11 durch von oben nach unten seitlich um die Schaufelrolle 11 verlaufenden Riemen 12 verdeckt, so dass der verdrillte Teigstreifen 16 nicht herausfallen kann. Die Riemen 12 enden erst an einer Position unterhalb der Schaufelrolle 11, so dass der Teigstreifen 16 auf einer Unterseite der Schaufelrolle 11 aus seinem Raum zwischen den Schaufeln der Schaufelrolle 11 heraus auf ein drittes Förderband 8 oder auf ein Backblech 13 fallen kann.

Unterhalb des Transportbands 9 befindet sich ein drittes Förderband 8, welches parallel zum Transportband 9 ausgerichtet ist. Dieses dritte Förderband 8 ist etwas länger als das Transportband 9 und reicht etwas über das zweite Ende des Transportbands 9 hinaus bis unterhalb der Schaufelrolle 11. Dadurch können Backbleche 13 auf dem dritten Förderband 8 befördert werden, auf welche die verdrillten Teigstreifen 16 aus der Schaufelrolle 11 fallen gelassen werden. In den Figuren 1a, 1b und 2 ist eine entsprechende Ausführungsform der Anlage 1 dargestellt, in welcher das dritte Förderband 8 aus der durchgehenden Öffnung im zweiten Maschinenkörper 3 heraus in eine horizontale Anordnungen 7 von quer zum Transportband 9 ausgerichteten Rollen übergeht. Auf dieser horizontalen Anordnung 7 kann ein mit verdrillten Teigstreifen 15 gefülltes Backblech 13 aus dem zweiten Maschinenkörper 3 der Anlage 1 gezogen werden.

Figur 3 zeigt eine Schrägansicht einer Vorrichtung 100 zum maschinellen Verdrillen von Teigstreifen. Die Vorrichtung 100 umfasst einen Rahmen 101, in welchem Greifeinheiten 102.1, ... 102.12 angeordnet sind. Dieser Rahmen 101 weist dazu Steckplätze auf, wovon jeder eine Greifeinheit 102.1, ... 102.12 aufnehmen kann. Diese Steckplätze sind in acht parallel ausgerichteten Reihen angeordnet. In jeder Reihe befinden sich vier Steckplätze. Wenn mindestens zwei Steckplätze in einer Reihe von Steckplätzen mit einer Greifeinheit 102.1, ... 102.12 besetzt sind, so wird dadurch eine Verdrillanordnung gebildet. In der Darstellung in Figur 3 sind insgesamt drei der acht Reihen von Steckplätzen mit je vier Greifeinheiten 102.1, ... 102.12 besetzt. Dadurch werden drei Verdrillanordnungen gebildet, welche je vier Greifeinheiten 102.1, ... 102.12 umfassen, deren Achsen entlang der Reihen von Steckplätzen verlaufen und dementsprechend parallel zueinander angeordnet sind.

Der Rahmen 101 weist im Wesentlichen eine rechteckige Form mit vier Aussenkanten auf und ist horizontal ausgerichtet. Zwei erste dieser Aussenkanten sind parallel zu den Reihen der Steckplätze ausgerichtet, während zwei zweite dieser Aussenkanten rechtwinklig zu den Reihen der Steckplätze ausgerichtet sind. Der Rahmen 101 umfasst in jeder Ecke zwischen den vier Aussenkanten ein Lager 103.1, 103.2. Mit diesen Lagern 103.1, 103.2 ist der Rahmen an zwei Rundstäben 104.1, 104.2 gelagert, wobei jeweils zwei benachbarte Lager 103.1, 103.2 an einem der Rundstäbe 104.1, 104.2 gelagert sind. Dabei sind die Rundstäbe 104.1, 104.2 entlang der beiden zweiten Aussenkanten, welche rechtwinklig zu den Reihen der Steckplätze angeordnet sind, ausgerichtet. Der Rahmen 101 ist entlang der Rundstäbe 104.1, 104.2 bewegbar.

Entlang der Reihen von Steckplätzen betrachtet verläuft bei jedem Steckplatz für eine Greifeinheit 102.1, ... 102.12 vorne und hinten des jeweiligen Steckplatzes je eine Getriebestange 105.1, ... 105.8 quer zur Ausrichtung der Reihen von Steckplätzen. Diese Getriebestangen 105.1, ... 105.8 verlaufen parallel zu den beiden zweiten Aussenkanten des Rahmens 101 von der einen zur anderen der ersten Aussenkanten des Rahmens 101. Somit verlaufen die Getriebestangen 105.1, ...105.8 auch parallel zu den beiden Rundstäben 104.1, 104.2. Bei jedem der jeweils acht Steckplätze, an welchem jede der Getriebestangen 105.1, ... 105.8 vorbeiläuft, befindet sich auf den Getriebestangen 105.1, ... 105.8 ein Zahnrad. Entlang der Reihen von Steckplätzen betrachtet ist jeweils die vor dem Steckplatz liegende Getriebestange 105.1, 105.3, 105.5, 105.7 auf einer Aussenseite der einen ersten Aussenkante des Rahmens 101 von einem Motor 106.1, ... 106.4 mit Decoder angetrieben. Die jeweils hinter dem Steckplatz liegende Getriebestange 105.2, 105.4, 105.6, 105.8 ist auf einer Aussenseite der anderen ersten Aussenkante des Rahmens 101 von einem Motor 106.5, ... 106.8 mit Decoder angetrieben.

Figur 4 zeigt wie bereits Figur 3 eine Schrägansicht der Vorrichtung 100 zum maschinellen Verdrillen von Teigstreifen. Im Unterschied zur Figur 3 ist eine der Greifeinheiten 102.10 oberhalb des Rahmens 101 gezeigt. Mit drei Linien ist angedeutet, wie diese Greifeinheit 102.10 in einen Steckplatz im Rahmen 101 einsetzbar ist. Um dieses Einsetzen der Greifeinheiten 102.1, ... 102.12 in die Steckplätze zu ermöglichen, ist am Rahmen 101 bei jedem Steckplatz ein Blechstreifen angebracht. Diese Blechstreifen sind vertikal an einem Rand des jeweiligen Steckplatzes befestigt und zeigen nach oben. Auf einer Höhe eines oberen Endes der Greifeinheiten 102.1, ... 102.12 sind die Blechstreifen jeweils zu einem Hacken gebogen. Wenn eine Greifeinheit in einen Steckplatz eingesetzt wird, so reicht dieser Hacken des Blechstreifens 102.1, ... 102.12 in horizontaler Richtung etwas über das obere Ende der Greifeinheit 102.1, ... 102.12, wodurch die Greifeinheit 102.1, ... 102.12 am Rahmen 101 fixiert wird.

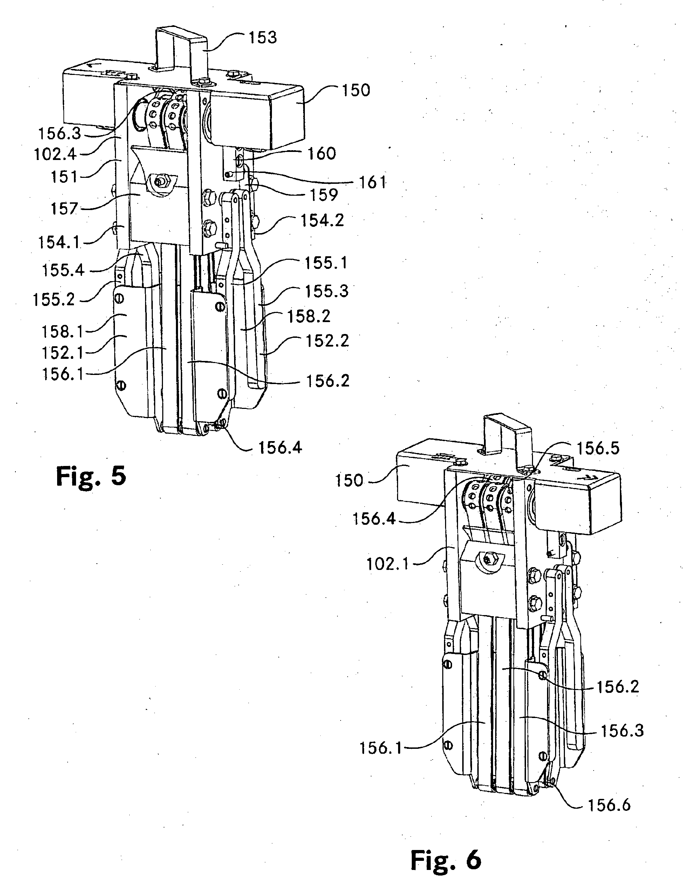

Figur 5 zeigt eine Schrägansicht von einer der Greifeinheiten 102.4. Am Beispiel dieser Greifeinheit 102.4 wird der Aufbau der in Figuren 3 und 4 dargestellten Greifeinheiten 102.1, ... 102.12 gezeigt. Die Greifeinheit 102.4 umfasst einen Kopf 150, einen Körper 151 sowie zwei Finger 152.1, 152.2. Der Kopf 150 weist eine im Wesentlichen flache, horizontal ausgerichtete Oberfläche auf. In einer Mitte dieser Oberfläche ist ein aus einem Blechstreifen gefertigter Handgriff 153 angebracht. An diesem Handgriff 153 kann die Greifeinheit 102.4 in einen Steckplatz des in Figuren 3 und 4 gezeigten Rahmens 101 gesteckt oder aus diesem entfernt werden. Ein Grundriss des Kopfs 150, welcher einem horizontalen Schnitt durch den Kopf 150 entspricht, hat die Form von zwei parallel zueinander ausgerichteten, nebeneinander angeordneten Rechtecken, welche in Längsrichtung leicht zueinander verschoben sind. Diese Längsrichtung des Grundrisses des Kopfs 150 ist, falls die Greifeinheit 102.4 in den Rahmen 101 (siehe Figur 3 oder 4) eingesetzt ist, parallel zu den Reihen von Steckplätzen ausgerichtet. Sie entspricht somit der Orientierung der im Wesentlichen geraden Linie, entlang welcher die wenigstens zwei Greifeinheiten einer Verdrillanordnung angeordnet sind, welche durch wenigstens zwei in einer Reihe von Steckplätzen eingesetzte Greifeinheiten 102.1, ... 102.12 gebildet wird. Um die Beschreibung der Greifeinheit 102.4 zu vereinfachen, wird in der Folge eine Ebene als Mitte der Greifeinheit 102.4 bezeichnet, welche vertikal ausgerichtet ist und den Grundriss des Kopfs 150 entlang der Längsrichtung des Kopfs 150 zwischen den beiden nebeneinander angeordneten Rechtecken schneidet.

In einem Gehäuse des Kopfs 150 befinden sich zwei Drehachsen. Die eine befindet sich auf der einen Seite der Mitte der Greifeinheit 102.4, während sich die andere auf der anderen Seite der Mitte der Greifeinheit 102.4 befindet. Beide Drehachsen sind horizontal in Längsrichtung des Kopfs 150 ausgerichtet. Jede der beiden Drehachsen ist im Grundriss des Kopfs 150 in einem der beiden Rechtecke angeordnet. In einem Bereich beider Rechtecke, welcher das jeweils andere Rechteck in Längsrichtung überschiesst, ist ein Zahnrad an der entsprechenden Drehachse angeordnet. Somit umfasst der Kopf 150 in Längsrichtung vorne und hinten je ein Zahnrad. Wenn nun der Kopf 150 in den Rahmen 101 eingesetzt ist, so wirken diese beiden Zahnräder mit den beiden Zahnrädern der beiden Getriebestangen 105.1, ... 105.8, welche am entsprechenden Steckplatz im Rahmen 101 vorbeilaufen, zusammen. Somit sind die beiden Drehachsen durch die Getriebestangen 105.1, ... 105.8 antreibbar (siehe dazu auch Figuren 3 und 4).

Der Körper 151 der Greifeinheit 102.4 umfasst zwei parallel zueinander angeordnete Platten 154.1, 154.2. Diese Platten 154.1, 154.2 sind mit ihren Hauptflächen rechtwinklig zu den Drehachsen ausgerichtet. Sie verlaufen vom Kopf 150 beginnend nach unten. Beide Drehachsen verlaufen durch beide Platten 154.1, 154.2 und sind in den Platten 154.1, 154.2 drehbar gelagert.

Die beiden Platten 154.1, 154.2 bilden in Längsrichtung des Kopfs 150 betrachtet ein vorderes und ein hinteres Ende des Körpers 151. In einer unteren Hälfte der beiden Platten 154.1, 154.2 sind die beiden Platten 154.1, 154.2 in einem Bereich von ihren vertikal ausgerichteten Seitenkanten beidseitig mit einem Metallstück 157 miteinander verbunden. Daher wird der Körper 151 durch die beiden Platten 154.1, 154.2 und die beiden Metallstücke 157 vorne und hinten sowie seitlich abgeschlossen. Auf einer Aussenseite der beiden Platten 154.1, 154.2 sind im unteren Bereich der Platten 154.1, 154.2 nebeneinander je zwei Stäbe 155.1, ... 155.4 an einem oberen Ende der Stäbe 155.1, ... 155.4 schwenkbar gelagert. Die Schwenkachsen dieser Stäbe 155.1, ... 155.4 sind in Längsrichtung des Kopfs 150 ausgerichtet und die Stäbe 155.1, ... 155.4 hängen schwenkbar nach unten. An einem unteren Rand der beiden Platten 154.1, 154.2 sind auf den Aussenseiten der Platten 154.1, 154.2 je zwei Zapfen angebracht. Diese Zapfen sind in Längsrichtung des Kopfs 150 ausgerichtet und derart nebeneinander angeordnet, dass die beiden Stäbe 155.1, ... 155.4, welche auf der Aussenseite der entsprechenden Platte 154.1, 154.2 gelagert sind, zwischen den beiden Zapfen nach unten hängen. Die beiden Zapfen beschränken dadurch die mögliche Schwenkbewegung der Stäbe 155.1, ... 155.4.

Pro Platte 154.1, 154.2 ist jeweils einer der Stäbe 155.1, ... 155.4 auf der einen Seite der Mitte der Greifeinheit 102.4 und ein anderer der Stäbe 155.1, 155.4 auf der anderen Seite der Mitte der Greifeinheit 102.4 gelagert. Die beiden Stäbe 155.1, ... 155.4, welche an unterschiedlichen Platten 154.1, 154.2 aber auf derselben Seite der Mitte der Greifeinheit 102.2 angeordnet sind, bilden jeweils zusammen ein Paar. Entsprechend sind sich die beiden Stäbe 155.1, ... 155.4 eines Paares in Richtung der Längsachse des Kopfs 150 gegenüberliegend schwenkbar an den Platten 154.1, 154.2 gelagert. Dabei sind die beiden Stäbe 155.1, ... 155.4 eines Paares derart angeordnet, dass sie eine gleiche Schwenkachse haben. Die beiden Stäbe 155.1, ... 155.4 eines Paares sind an einem unteren Ende der beiden Stäbe 155.1, ... 155.4 über eine Achse miteinander verbunden. Diese Achse ist jeweils parallel zur Längsachse des Kopfs 150 ausgerichtet. Auf dieser Achse sind zwischen den beiden Stäben 155.1, ... 155.4 zwei Umlenkrollen drehbar gelagert. Etwas oberhalb der unteren Enden der beiden Stäbe 155.1, ... 155.4 eines Paares sind die beiden Stäbe 155.1, ... 155.4 zudem durch ein Blech 158.1, 158.2 miteinander verbunden. Dieses Blech 158.1, 158.2 ist parallel zu den Stäben ausgerichtet und reicht von oberhalb der Achsen am unteren Ende der Stäbe 155.1, ... 155.4 bis kurz unterhalb der beiden Platten 154.1, 154.4 des Körpers 151.

Im Kopf 150 der Greifeinheit 102.4 befinden sich auf beiden Drehachsen zwischen den beiden Platten 154.1, 154.2 je zwei zahnradähnliche Räder mit Zapfen. Beidseitig der Mitte der Greifeinheit 102.4 sind zwischen den beiden Rädern mit Zapfen und den beiden Umlenkrollen am unteren Ende der Stäbe 155.1, ... 155.4 zwei Endlosbänder 156.1, ... 156.4 angeordnet. Diese Endlosbänder 156.1, ... 156.4 umlaufen das entsprechende Blech 158.1, 158.2, welches die entsprechenden beiden Stäbe 155.1, 155.4 verbindet. Die insgesamt vier Endlosbänder 156.1, ... 156.4 weisen entlang des Verlaufs der Endlosbänder 156.1, ... 156.4 in regelmässigem Abstand Löcher auf. Die Zapfen der Räder mit Zapfen greifen in diese Löcher ein und ermöglichen dadurch über die Drehachsen einen Antrieb der Endlosbänder 156.1, ... 156.4. Da auf jeder Seite der Mitte der Greifeinheit 102.4 des einen Endlosbands 156.1, 156.3 mehr Löcher als das andere Endlosband 156.2, 156.4 aufweist, wird dieses Endlosband 156.1, 156.3 schneller als das andere Endlosband 156.2, 156.4 angetrieben.

Wie bereits erwähnt, umfasst die Greifeinheit 102.4 zwei Finger 152.1, 152.2. Je einer dieser Finger 152.1, 152.2 befindet sich auf einer anderen Seite der Mitte der Greifeinheit 102.2. Die Finger 152.1, 152.2 umfassen die auf der entsprechenden Seite der Mitte der Greifeinheit 102.4 liegenden Stäbe 155.1, ... 155.4 mit den Achsen und den Blechen 158.1, 158.2, welche die Stäbe 155.1, ... 155.4 verbinden, sowie die auf der entsprechenden Seite der Mitte der Greifeinheit 102.2 angeordneten Endlosbänder 156.1, .. 156.4.

Einer der Finger 152.2 weist am oberen Ende eines der Stäbe 155.3 ein Federblech 159 auf, welches vom oberen Ende des Stabs 155.3 vertikal nach oben zeigt. Wenn der Finger 152.2 und somit der Stab 155.3 geschwenkt wird, wird dadurch ein freies Ende des Federblechs 159 in eine entgegengesetzte Richtung geschwenkt, da sich dieses oberhalb der Schwenkachse des Stabs 155.3 befindet. Somit wird, wenn der Finger 152.2 von der Mitte der Greifeinheit 102.2 und damit vom anderen Finger 152.1 weggeschwenkt wird, das Federblech 159 zur Mitte der Greifeinheit 102.4 hin geschwenkt. In dieser Richtung des Federblechs 159 ist ein blockförmiger Widerstand 160 an der Platte 154.2 des Körpers 151 angebracht. In diesem Widerstand 160 ist eine Schraube 161 eingeschraubt. Diese Schraube 161 ist horizontal und rechtwinklig zur Längsachse des Kopfs 150 ausgerichtet. Ihr Ende reicht über den Widerstand 160 hinaus, so dass das Federblech 159 bei der beschriebenen Schwenkbewegung des Fingers 152.2 weg von der Mitte der Greifeinheit 102.4 gegen das Ende der Schraube gedrückt wird. Durch wird über das Federblech 159 eine Federkraft auf den Finger 152.2 ausgeübt, welche den Finger 152.2 gegen den Finger 152.1 drückt. Durch drehen der Schraube 161 kann diese Federkraft verstellt und angepasst werden.

Wie in den Figuren 3 und 4 gezeigt, wird die Greifeinheit 102.4 mit den Fingern 152.1, 152.2 nach unten zeigend in den Rahmen 101 eingesetzt. Wenn nun der Rahmen 101 zu einem auf einer Unterlage liegenden, parallel zur Längsrichtung des Kopfs 150 ausgerichteten Teigstreifen abgesenkt wird, kann der Teigstreifen zwischen den Fingern 152.1, 152.2 hochgehoben werden, indem die Endlosbänder 156.1, ... 156.4 der beiden Finger 152.1, 152.2 gegenläufig angetrieben werden. Durch die Bewegung der Endlosbänder 156.1, ... 156.4 wird der Teigstreifen zwischen den beiden Fingern 152.1, 152.2 hochgehoben. Um dies zu ermöglichen, sollte aber ein Abstand zwischen den beiden Fingern 152.1, 152.2 derart eingestellt sein, dass ein Teigstreifen durch die vom Federblech 159 erzeugte Federkraft zwischen den Fingern 152.1, 152.2 festgehalten wird. Wenn der Teigstreifen zwischen den Fingern 152.1, 152.2 hochgehoben ist, so können die Endlosbänder 156.1, ... 156.4 der beiden Finger 152.1, 152.2 in gleicher Richtung angetrieben werden. Dadurch wird der Teigstreifen zwischen den Fingern 152.1, 152.2 um seine Längsachse gedreht, während er seine Position zwischen den Fingern 152.1, 152.2 beibehält. Da bei beiden Fingern 152.1, 152.2 die beiden Endlosbänder 156.1, ... 156.4 unterschiedlich schnell angetrieben werden, wird der Teigstreifen beim Drehen zwischen den beiden Endlosbänder 156.1, ... 156.4 zudem leicht verdrillt.

Im Betrieb der erfindungsgemässen Vorrichtung wird der Teigstreifen von wenigstens zwei Greifeinheiten 102.1, ... 102.12 hochgehoben und gedreht. Da der Teigstreifen von den verschiedenen Greifeinheiten 102.1, 102.12 unterschiedlich schnell und möglicherweise auch in unterschiedliche Drehrichtung gedreht wird, wird der Teigstreifen verdrillt.

Figur 6 zeigt wie bereits Figur 5 eine Schrägansicht von einer der Greifeinheiten 102.1. Im Unterschied zur Greifeinheit 102.4 aus Figur 4 umfasst die hier gezeigte Greifeinheit 102.1 jedoch pro Finger 152.1, 152.2 drei nebeneinander angeordnete Endlosbänder 156.1, ... 156.6 anstelle von zwei Endlosbändern 156.1, ... 156.4. Diese drei Endlosbänder 156.1, ... 156.6 pro Finger 152.1, 152.2 werden ebenfalls aufgrund einer unterschiedlichen Anzahl Löcher unterschiedlich schnell angetrieben.

Im Rahmen 101, welcher in Figuren 3 und 4 gezeigt ist, werden Greifeinheiten 102.1, 102.2, 102.3, 102.10, 102.11, 102.12, welche wie die in Figur 6 gezeigte Greifeinheit 102.1 drei Endlosbänder 156.1, ... 156.6 pro Finger 152.1, 152.2 umfassen, vorzugsweise am Rand einer Reihe von Steckplätzen eingesetzt. Greifeinheiten 102.4, ... 102.9, welche hingegen wie die in Figur 5 gezeigte Greifeinheit 102.4 zwei Endlosbänder 156.1, ... 156.4 pro Finger 152.1, 152.2 umfassen, werden vorzugsweise an einem Steckplatz in der Mitte einer Reihe von Steckplätzen eingesetzt. Diese Anordnung der Greifeinheiten 102.1, ... 102.12 führt dazu, dass die Greifeinheiten 102.1, 102.2, 102.3, 102.10, 102.11, 102.12 mit drei Endlosbänder 156.1, ... 156.6 pro Finger 152.1, 152.2 am Rand der Reihen von Steckplätzen Enden von Teigstreifen hochheben und drehen. Da eine Position der Enden der zugeführten Teigstreifen in Längsrichtung der Teigstreifen leicht variieren können, wird durch diese Greifeinheiten 102.1, 102.2, 102.3, 102.10, 102.11, 102.12 mit drei Endlosbänder 156.1, ... 156.6 pro Finger 152.1, 152.2 ein Greifen der Teigstreifen zuverlässiger erreicht.

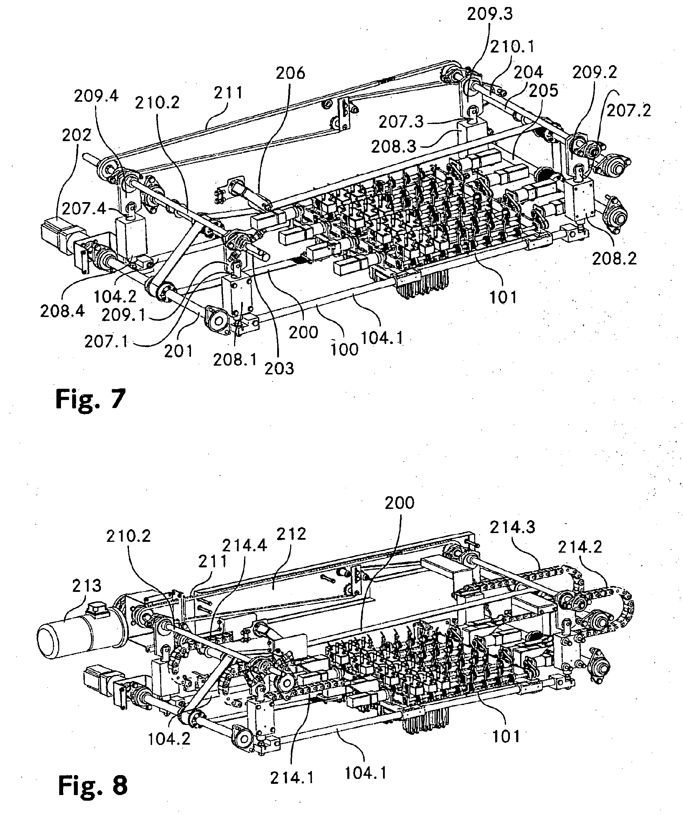

Figur 7 zeigt wie bereits die Figuren 3 und 4 eine Schrägansicht der Vorrichtung 100 zum maschinellen Verdrillen von Teigstreifen. Der Rahmen 101 befindet sich an einem ersten Ende der Rundstäbe 104.1, 104.2.

Wenn die Vorrichtung 100 wie in Figur 1b gezeigt in die Anlage 1 eingebaut ist und zum Verdrillen von Teigstreifen verwendet wird, so ist sie mit den Rundstäben 104.1, 104.2 parallel zum Transportband 9 über dem Transportband 9 angeordnet. Wenn nun Teigstreifen vom Transportband 9 ersten Ende der Rundstäbe 104.1, 104.2 her unter den Rahmen 101 gefördert werden, so wird der Rahmen 101 mit gleicher Geschwindigkeit wie sich das Transportband 9 in Richtung eines zweiten Endes der Rundstäbe 104.1, 104.2 bewegt, sobald sich Teigstreifen unter den Fingern der Greifeinheiten befinden. Gleichzeitig wird der Rahmen 101 gesenkt, so dass die Finger der Greifeinheiten von jeder Verdrillanordnung einen Teigstreifen, welcher quer zum Transportband 9 und parallel zur im Wesentlichen geraden Linie, entlang welcher die wenigstens zwei Greifeinheiten der entsprechenden Verdrillanordnung angeordnet sind, ausgerichtet ist, greifen und hochheben können. Dazu werden die Endlosbänder der Finger der Greifeinheiten aller Verdrillanordnungen von den Motoren 106.1, ... 106.8 über die Getriebestangen 105.1, ... 105.8 angetrieben (siehe dazu Figuren 3 und 5). Sobald die Teigstreifen gehoben sind, werden sie von den Verdrillanordnungen verdrillt und danach wieder auf dem Transportband 9 deponiert. Dies alles geschieht, während der Rahmen 101 zu den zweiten Enden der Rundstäbe 104.1, 104.2 bewegt wird. Sobald die Teigstreifen wieder auf dem Transportband 9 deponiert sind, wird der Rahmen 101 hochgehoben und mit grosser Geschwindigkeit zurück zum ersten Ende der Rundstäbe 104.1, 104.2 bewegt. Dort wird der Rahmen 101, sobald sich die Finger der Greifeinheiten wieder über Teigstreifen befinden, wieder zu den zweiten Enden der Rundstäbe 104.1, 104.2 bewegt und gleichzeitig gesenkt, damit die Teigstreifen hochgehoben und verdrillt werden können.

Hier in Figur 7 ist die Absenkvorrichtung sowie die Vorrichtung zur Bewegung des Rahmens 101 entlang der Rundstäbe 104.1, 104.2 gezeigt. Beide Vorrichtungen scheinen in der Luft zu schweben, da die umhüllende Anlage 1 nicht gezeigt ist. Der Antrieb der Bewegung des Rahmens 101 entlang der Rundstäbe 104.1, 104.2 wird durch einen Riemen 200 erreicht. Der Riemen 200 verläuft zwischen den beiden Rundstäben 104.1, 104.2 und ist im Wesentlichen parallel zu diesen ausgerichtet. Er ist mit einem ersten Ende an einer dem zweiten Ende der Rundstäbe 104.1, 104.2 zugewandten Aussenkante des Rahmens 101 befestigt, welche senkrecht zu den beiden Rundstäben 104.1, 104.2 verläuft. Von dort verläuft er parallel zu den Rundstäben 104.1, 104.2 bis etwas über das zweite Ende der Rundstäbe 104.1, 104.2 hinaus. Dort wird er von einer Antriebswelle 201, welche in horizontaler Richtung quer zu den Rundstäben 104.1, 104.2 ausgerichtet ist, schräg nach oben zurück umgelenkt. Die Antriebswelle 201 ist an beiden Enden am Gehäuse der Anlage 1 drehbar gelagert und am einen Ende durch einen Motor 202 angetrieben. Oberhalb und etwas innerhalb des zweiten Endes der Rundstäbe 104.1, 104.2 läuft der Riemen 200 um eine erste Umlenkwelle 203, welche parallel zur Antriebswelle 201 ausgerichtet ist und ebenfalls an beiden Enden am Gehäuse der Anlage 1 drehbar gelagert ist. Nach dieser ersten Umlenkwelle 203 verläuft der Riemen 200 im Wesentlichen in horizontaler Richtung parallel zu den beiden Rundstäben 104.1, 104.2 bis etwas über das erste Ende der beiden Rundstäbe 104.1 104.2 hinaus. Dort wird er erst durch eine zweite Umlenkwelle 204 senkrecht nach unten umgelenkt und dann von einer dritten Umlenkwelle 205 in horizontaler Richtung zum Rahmen 101 umgelenkt, an dessen dem ersten Ende der beiden Rundstäbe 104.1, 104.2 zugewandte Aussenkante er mit seinem zweiten Ende befestigt ist. Sowohl die zweite als auch die dritte Umlenkwelle 204, 205 sind in horizontaler Richtung senkrecht zu den Rundstäben 104.1, 104.2 ausgerichtet und mit beiden Enden drehbar am Gehäuse der Anlage 1 gelagert.

Da die beiden Rundstäbe 104.1, 104.2 mit dem Rahmen 101 hebbar und senkbar sind, während die Antriebswelle 201 sowie die erste, zweite und dritte Umlenkwelle 203, 204, 205 in ihrer Position ortsfest sind, wird der Riemen 200 durch die vertikale Bewegung des Rahmens 101 unterschiedlichen Spannungen ausgesetzt. Um diese unterschiedlichen Spannungen zu kompensieren, ist zwischen der ersten und der zweiten Umlenkwelle 203, 204 eine Spannrolle 206 am Gehäuse der Anlage 1 angebracht. Diese Spannrolle 206 drückt von oben auf den Riemen 200 und drückt ihn somit etwas aus der geraden, horizontalen Verbindungslinie zwischen der ersten und der zweiten Umlenkwelle 203, 204.

Durch die Absenkvorrichtung können die Rundstäbe 104.1, 104.2 mit dem Rahmen 101 gehoben und gesenkt werden. Dazu sind die Rundstäbe 104.1, 104.2 an beiden Enden mit vertikalen Stangen 207.1, ... 207.4 verbunden. Diese vertikalen Stangen 207.1, ... 207.4 werden je in einer durchgehenden Bohrung in einem am Gehäuse der Anlage 1 befestigten Block 208.1, ... 208.4 gelagert. Dadurch ist eine Bewegung der vertikalen Stangen 207.1, ... 207.4 in vertikaler Richtung geführt. An oberen Enden der vertikalen Stangen 207.1, ... 207.4 sind die vertikalen Stangen 207.1, ... 207.4 je mit einer Platte 209.1, ... 209.4 verbunden. Die Platten 209.1, ... 209.4 sind mit ihren Hauptflächen senkrecht ausgerichtet, wobei die Hauptflächen parallel zu den Rundstäben 104.1, 104.2 verlaufen. Die Platten 209.1, ... 209.4 sind in einer Ebene ihrer Hauptflächen schwenkbar mit den vertikalen Stangen 207.1, ... 207.4 verbunden. In jeder der Platten 209.1, ... 209.4 befindet sich ein Exzenter, welcher mit einer Drehachse 210.1, 210.2 verbunden ist. Die beiden mit den ersten Enden der Rundstäbe 104.1, 104.2 verbundenen Platten 209.2, 209.3 sind dabei mit der einen der beiden Drehachsen 210.1 verbunden, während die beiden mit den zweiten Enden der der Rundstäbe 104.1, 104.2 verbundenen Platten 209.1, 209.4 mit der anderen der beiden Drehachsen 210.2 verbunden ist. Die beiden Drehachsen 210.1, 210.2 sind horizontal und rechtwinklig zu den beiden Rundstäben 104.1, 104.2 ausgerichtet. Durch Drehen der beiden Drehachsen 210.1, 210.2 können die Platten 209.1, ... 209.4 und damit auch die beiden Rundstäbe 104.1, 104.2 über die Exzenter gehoben und gesenkt werden.

Um die Drehungen der beiden Drehachsen 210.1, 210.2 zu synchronisieren, sind die beiden Drehachsen 210.1, 210.2 über je ein Zahnrad und eine Kette 211 miteinander verbunden. Damit wird gewährleistet, dass die beiden Rundstäbe 104.1, 104.2 beim Heben und Senken horizontal ausgerichtet bleiben, weil alle vier vertikalen Stangen 207.1, ... 207.4 gleich stark gehoben und gesenkt werden.

Wie bereits in Figur 7 ist auch in Figur 8 die Absenkvorrichtung sowie die Vorrichtung zur Bewegung des Rahmens 101 entlang der Rundstäbe 104.1, 104.2 gezeigt. Im Gegensatz zur Figur 7 ist hier aber zusätzlich eine Abdeckung 212 der Kette 211 sowie ein Motor 213 zum Antrieb der einen Drehachse 210.2 gezeigt. Zudem sind insgesamt vier Kabelketten 214.1, ... 214.4 gezeigt, über welche der Rahmen 101 mit Strom sowie Steuerdaten versorgt wird. Diese Kabelketten 214.1, ... 214.4 sind je mit einem ersten Ende mit dem Rahmen 101 verbunden. Dabei sind zwei Kabelketten 214.1, 214.4 nebeneinander etwas erhöht an derjenigen der Aussenkanten des Rahmens 101 befestigt, welche den zweiten Enden der beiden Rundstäbe 104.1, 104.2 zugewandt ist. Die beiden Kabelketten 214.1, 214.4 verlaufen parallel zum Riemen 200 in horizontaler Richtung weg vom Rahmen 101, sind nach einer gewissen Distanz hochgebogen sind und verlaufen in horizontaler Richtung wieder zurück. Ihre zweiten Enden sind mit dem Gehäuse der Anlage 1 verbunden. In ähnlicher Weise sind die zwei weiteren Kabelketten 214.2, 214.3 nebeneinander etwas erhöht an derjenigen Aussenkante des Rahmens 101 befestigt, welche den ersten Enden der beiden Rundstäbe 104.1, 104.2 zugewandt ist. Die beiden Kabelketten 214.2, 214.3 verlaufen parallel zum Riemen 200 in horizontaler Richtung weg vom Rahmen 101, sind nach einer gewissen Distanz hochgebogen sind und verlaufen in horizontaler Richtung wieder zurück. Ihre zweiten Enden sind ebenfalls mit dem Gehäuse der Anlage 1 verbunden.

Zum Betrieb der Anlage 1 zum maschinellen Verdrillen von Teigstreifen 15 werden von der Steuerung 4 (siehe Figuren 1a und 1b) Steuerdaten über Kabel durch die vier Kabelketten 214.1, ... 214.4 zu den Motoren 106.1, ... 106.8 (siehe auch Figuren 3 und 4) übertragen. Durch individuelle Ansteuerung der Motoren 106.1, ... 106.8 werden die Getriebestangen 105.1, ... 105.8 individuell angetrieben, wodurch in den Reihen von Greifeinheiten 102.1, 102.12 bei jeder Greifeinheit 102.1, ... 102.12 für beide Finger separat die Endlosbänder angetrieben werden. Wenn die Endlosbänder der beiden Finger gegenläufig angetrieben werden, können die Teigstreifen 15 durch die Greifeinheiten 102.1, ... 102.12 gegriffen oder losgelassen werden. Wenn die Endlosbänder der beiden Finger in die gleiche Richtung angetrieben werden, so können die Teigstreifen 15 von der entsprechenden Greifeinheit 102.1, ... 102.12 gedreht werden. Da innerhalb der Reihen von Greifeinheiten 102.1, ... 102.12 die einzelnen Greifeinheiten 102.1, ... 102.12 separat angesteuert werden können, kann gesteuert werden, wie stark die Teigstreifen 15 von jeder der Greifeinheiten 102.1, ... 102.12 gedreht werden. Dies ermöglicht ein kontrolliertes Verdrillen der Teigstreifen 15. Entsprechend kann dadurch einerseits der Verdrillungsgrad der Teigstreifen 15 gesteuert werden. Andererseits kann dadurch auch gesteuert werden, ob die Teigstreifen 15 regelmässig oder unregelmässig verdrillt werden.

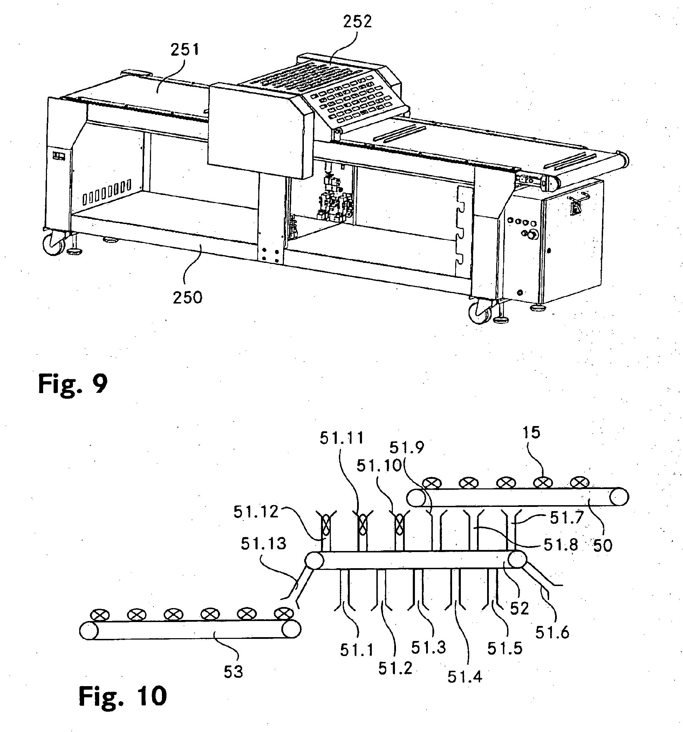

Figur 9 zeigt eine Schrägansicht einer Schneidanlage 250, welche an die in Figuren 1a und 1b gezeigte Anlage 1 angehängt werden kann. Dazu wird die Schneidanlage 250 mit ihrem Transportband 251 an die horizontale Anordnung 7 von Rollen am zweiten Ende der Anlage 1 angeschlossen. Da das Transportband 251 eine selbe Höhe wie die horizontale Anordnung 7 aufweist, werden vom Transportband 251 mit verdrillten Teigstreifen belegte Backbleche von der Anlage 1 übernommen. Diese Backbleche werden vom Transportband 251 in horizontaler Richtung entlang einer Länge der Schneideanlage 250 gefördert. Dabei passieren die Backbleche in einer Mitte der Schneideanlage 250 unter einer Schutzabdeckung 252 hindurch, unter welcher Schneideräder angeordnet sind. Diese Schneideräder sind mit ihren Drehachsen quer zum Transportband 251 ausgerichtet. Die Anzahl der Schneideräder sowie ein Abstand zwischen den Schneiderädern ist variierbar. Dadurch können die verdrillten Teigstreifen auf dem Backblech in Stücke einer gewünschten Länge geschnitten werden. Sobald die Backbleche mit den verdrillten und zurechtgeschnittenen Teigstreifen unter der Schutzabdeckung 252 hindurch sind, können sie an einem hinteren Ende der Schneideanlage 250 vom Transportband 251 gehoben und nach Bedarf in einen Zwischenspeicher oder direkt in einen Backofen geschoben werden.

Das oben beschriebene Beispiel der Anlage 1 zum maschinellen Verdrillen von Teigstreifen umfasst nicht die einzige Ausführungsform einer erfindungsgemässen Vorrichtung zum maschinellen Verdrillen von Teigstreifen. Auch handelt es sich beim oben beschriebenen Beispiel nicht um die einzige Vorrichtung, welche für das erfindungsgemässe Verfahren zum maschinellen Verdrillen von Teigstreifen verwendet werden kann. Die beschriebene Vorrichtung kann in verschiedene, weitere erfindungsgemässe Ausführungsformen abgewandelt werden, wovon hier einige wenige genannt sind. Dem Fachmann steht es frei, diese Ausführungsformen weiter abzuändern und konkreten Bedürfnissen anzupassen.

In einer weiteren, erfindungsgemässen Ausführungsform können beispielsweise pro Verdrillanordnung mehr oder weniger als die oben beschriebenen vier Greifeinheiten verwendet werden. Dazu kann einzig die Anzahl Steckplätze pro Reihe im Rahmen angepasst werden. Genauso kann die Vorrichtung auch mehr oder weniger als die oben beschriebenen maximal acht möglichen Verdrillanordnungen umfassen. Dazu genügt es, wenn die Anzahl der Reihen mit Steckplätzen im Rahmen angepasst wird.

Weiter kann beispielsweise die mindestens eine Verdrillanordnung nicht durch Einsetzen von Greifeinheiten in Steckplätzen in einem Rahmen, sondern durch wenigstens zwei fest miteinander verbundene Greifeinheiten gebildet werden. Die Vorrichtung ist dadurch zwar nicht mehr modular anpassbar, wird aber dadurch kostengünstiger herstellbar. Dabei kann wiederum je nach Bedürfnis die Anzahl Greifeinheiten pro Verdrillanordnung und die Anzahl der Verdrillanordnungen angepasst werden.

Der Abstand zwischen den Greifeinheiten einer Verdrillanordnung kann zudem variabel ausgeführt sein. Im Falle einer Ausführungsform, welche ähnlich wie oben beschrieben einen Rahmen mit Steckplätzen umfasst, können beispielsweise die Positionen der Steckplätze in einer Reihe relativ zueinander verschiebbar ausgebildet sein. Im Falle von fest miteinander verbundenen Greifeinheiten kann hingegen beispielsweise eine Art Teleskopverbindung zwischen den Greifeinheiten eingesetzt werden. Solche Ausführungsformen mit variablem Abstand zwischen den Greifeinheiten der mindestens einen Verdrillanordnung haben den Vorteil, dass ein Teigstreifen während des Verdrillens gestreckt werden kann. Dadurch kann auf ein Strecken der Teigstreifen in einem weiteren Verarbeitungsschritt verzichtet werden. Entsprechend erübrigt sich auch eine weitere Vorrichtung zum Strecken der Teigstreifen.

Die erfindungsgemässe Vorrichtung kann auch dahingehend angepasst werden, dass die Teigstreifen nicht auf einem Transportband, sondern beispielsweise auf einem Backblech der mindestens einen Verdrillanordnung zugeführt werden. Dadurch kann die Vorrichtung vereinfacht werden.

Weiter muss eine erfindungsgemässe Vorrichtung nicht unbedingt eine oben beschriebene Vorrichtung zur Bewegung der mindestens einen Verdrillanordnung entlang dem Transportband beinhalten. Einerseits kann die Vorrichtung für die Bewegung der mindestens einen Verdrillanordnung entlang dem Transportband beliebig anders ausgeführt sein. Andererseits muss die erfindungsgemässe Vorrichtung aber gar nicht unbedingt entlang dem Transportband bewegbar sein, sondern kann auch fest über dem Transportband angeordnet sein.

Unabhängig von der Bewegung der mindestens einen Verdrillanordnung entlang dem Transportband und der dazu verwendeten Vorrichtung kann die erfindungsgemässe Vorrichtung wie oben beschrieben auf das Transportband senkbar und wieder hebbar sein. Die oben beschriebene Absenkvorrichtung muss aber nicht in der beschriebenen Form ausgeführt sein. Dem Fachmann ist hier freigelassen, wie er diese Absenkvorrichtung ausbildet. Zudem kann er ganz auf die Absenkvorrichtung verzichten. Beispielsweise können die Teigstreifen auch durch Anheben des Transportbands oder des Backblechs der mindestens einen Verdrillanordnung zugeführt werden.

Ein weiteres Beispiel einer erfindungsgemässen Vorrichtung ist in der Figur 10 mit einer schematischen Darstellung illustriert. Hier werden die Teigstreifen 15 auf einem Transportband 50 gefördert. An einem Ende des Transportbands 50 fallen die Teigstreifen 15 jeweils auf eine Verdrillanordnung 51.1, ... 51.13 und werden jeweils von den Greifeinheiten der entsprechenden Verdrillanordnung 51.1, ... 51.13 gegriffen und verdrillt. Um dies zu ermöglichen, sind die Verdrillanordnungen 51.1, ... 51.13 auf einem Endlosband 52 angeordnet, welches parallel zum Transportband 15 unterhalb des Transportbands 15 angeordnet ist. Auf einer oberen Seite des Endlosbands 52 werden die Verdrillanordnungen 51.1, ... 51.13 in eine gleiche Richtung bewegt wie die Teigstreifen 15 vom Transportband 50 bewegt werden, während die Verdrillanordnungen 51.1, ... 51.13 auf einer unteren Seite des Endlosbands 52 in die umgekehrte Richtung bewegt werden. An einem Ende des Endlosbands 52, an welchem die Verdrillanordnungen 51.1, ... 51.13 von der oberen Seite des Endlosbands 52 auf die untere Seite des Endlosbands 52 bewegt werden, werden die verdrillten Teigstreifen von den Greifeinheiten der Verdrillanordnungen 51.1, ... 51.13 auf ein weiteres Transportband 53 abgelegt.

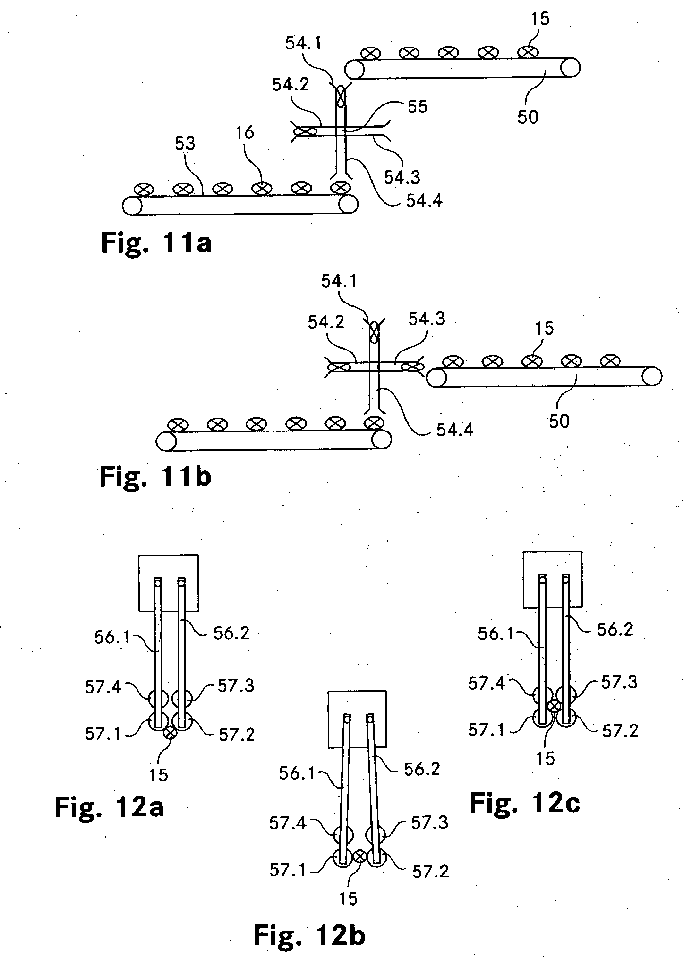

Ein weiteres Beispiel einer erfindungsgemässen Vorrichtung ist in der Figur 11a durch eine schematische Darstellung illustriert. Hier sind die Verdrillanordnungen 54.1, 54.2, 54.3, 54.4 nicht auf einem Endlosband, sondern sternförmig um eine Achse 55 angeordnet. Diese Achse ist im Wesentlichen parallel zu den Längsachsen der Teigstreifen 15 ausgerichtet. Die Teigstreifen 15 fallen ebenfalls jeweils an einem Ende des Transportbands 50 auf eine der Verdrillanordnungen 54.1, ... 54.4 und werden jeweils von den Greifeinheiten der entsprechenden Verdrillanordnung 54.1, ... 54.4 gegriffen und verdrillt. Gleichzeitig werden die Verdrillanordnungen 54.1, ... 54.4 um die Achse 55 gedreht, wobei die verdrillten Teigstreifen 16 jeweils von den Greifeinheiten der Verdrillanordnungen 54.1, ... 54.4 auf ein weiteres Transportband 53 abgelegt werden, wenn die entsprechende Verdrillanordnung 54.1, ... 54.4 nach unten ausgerichtet ist.

Wie in Figur 11b gezeigt, besteht dabei die Möglichkeit, dass die Teigstreifen 15 nicht am Ende des Transportbands 50 von oben auf eine der Verdrillanordnungen 54.1, ... 54.4 fallengelassen werden, sondern dass die Teigstreifen 15 jeweils am Ende des Transportbands 50 an die Greifeinheiten einer der Verdrillanordnungen 54.1, ... 54.4 übergeben werden. Dabei können die Greifeinheiten der entsprechenden Verdrillanordnung 54.1, .. 54.4 wie in Figur 11b gezeigt beispielsweise horizontal ausgerichtet sein. Sie können aber auch schräg nach oben oder schräg nach unten ausgerichtet sein.

Die Greifeinheiten einer erfindungsgemässen Vorrichtung zum maschinellen Verdrillen von Teigstreifen können ebenfalls spezifischen Bedürfnissen angepasst werden. Erstens müssen die Endlosbänder der Finger der Greifeinheiten entlang ihrer Ausrichtung nicht Löcher in regelmässigem Anstand aufweisen. Es können beispielsweise auch lochlose Endlosbänder verwendet werden. In diesem Fall sollte einzig beachtet werden, dass die antreibenden Rollen keine Zapfen aufweisen.

Weiter besteht die Möglichkeit, dass die Finger der Greifeinheiten nur eines an Stelle von zwei oder drei Endlosbändern aufweisen. Genauso können die Greifeinheiten aber auch vier oder mehr Endlosbänder aufweisen. Zudem können die Endlosbänder auch anders angeordnet sein. So können die Endlosbänder beispielsweise nicht vom Kopf der entsprechenden Greifeinheit bis an die unteren Enden der Finger verlaufen, sondern nur von unterhalb des Körpers der entsprechenden Greifeinheit bis ans untere Ende der Finger verlaufen.

Anstelle von zwei Fingern können die Greifeinheiten auch mehr Finger umfassen. Beispielsweise kann jeder Finger ein eigenes Endlosband umfassen. Es besteht aber auch die Möglichkeit, dass die Greifeinheiten nur einen Finger umfassen und den Teigstreifen mit diesem Finger gegen ein Gegenstück gedrückt greifen und drehen können.

Im oben beschriebenen Ausführungsbeispiel sind die beiden Finger gegeneinander schwenkbar am Körper der entsprechenden Greifeinheit gelagert. Diese Lagerung kann auch anders ausgeführt sein. So können die beiden Finger beispielsweise parallel verschiebbar am Körper der entsprechenden Greifeinheit gelagert sein. Dadurch sind die Finger immer parallel zueinander ausgerichtet, wobei ihr Abstand aber variierbar ist. Wie bereits oben beschreiben können die Finger auch in dieser weiteren Ausführungsform mit einer Feder gegeneinander vorgespannt sein. Ob es sich dabei nun um ein oben beschriebenes Federblech oder um eine Spiralfeder oder andere Federart handelt, bleibt dem Fachmann überlassen.

Die Greifeinheiten können auch grundlegend anders als oben beschrieben ausgebildet sein. Beispielsweise können sie Finger ohne Endlosbänder, dafür aber mit Zwischengelenken ausgebildet sein. In diesem Fall können die Teigstreifen ähnlich wie von einer menschlichen Hand gegriffen und gedreht werden. Weiter können die Greifeinheiten beispielsweise Finger ohne Endlosbänder und ohne Zwischengelenke aufweisen. Wie in den Figuren 12a, 12b und 12c schematisch dargestellt, können sie beispielsweise zwei Finger 56.1, 56.2 mit je zwei an ihren freien Enden angeordneten Rollen 57.1, 57.2, 57. 3, 57.4 aufweisen. Dabei können die Achsen der Rollen 57.1, 57.2, 57.3, 57.4 parallel zu den Längsachsen der zu verdrillenden Teigstreifen 15 ausgerichtet sein und pro Finger 56.1, 56.2 können die beiden Rollen 57.1, 57.2, 57.3, 57.4 derart zueinander angeordnet sein, so dass sich jeweils eine der Rollen 57.1, 57.2 am freien Ende des entsprechenden Fingers 56.1, 56.2 befindet und dass sich jeweils eine andere der Rollen 57.3, 57.4 etwas vom freien Ende des entsprechenden Fingers 56.1, 56.2 zurückversetzt befindet. Durch Antrieb der Rollen 57.1, 57.2 an den freien Enden der Finger 56.1, 56.2 In die entgegengesetzte Drehrichtung kann ein Teigstreifen 15 gegriffen werden (Figur 12b), sodass sich der gegriffene Teigstreifen 15 zwischen den vier Rollen 57.1, 57.2, 57.3, 57.4 befindet. Nun kann der gegriffene Teigstreifen 15 durch Antrieb der Rollen 57.1, 57.2, 57.3, 57.4 in eine gleiche Drehrichtung gedreht werden.

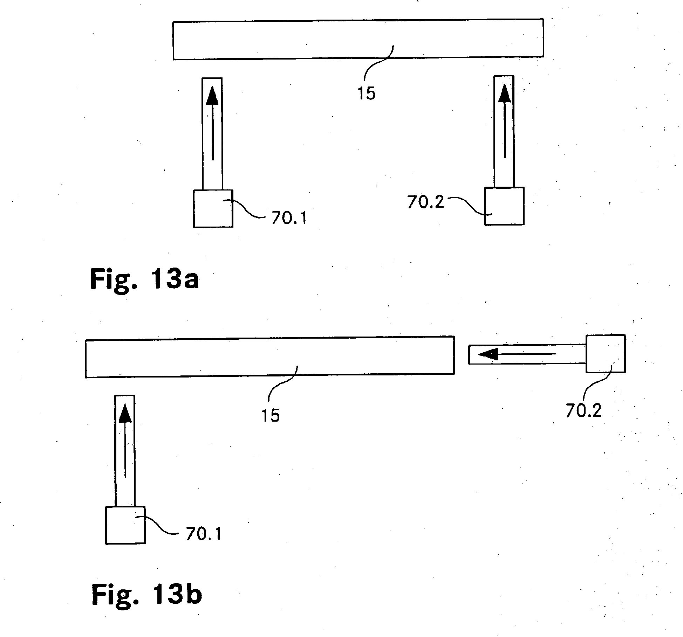

Figuren 13a und 13b zeigen zwei schematische Darstellungen jeweils zweier Greifeinheiten und eines Teigstreifens zur Illustration einer Greifrichtung der Greifeinheiten. Wie in Figur 13a dargestellt, können die Greifeinheiten 70.1, 70.2 beispielsweise die Teigstreifen 15 aus einer Richtung senkrecht zur Längsachse der Teigstreifen 15 greifen. Sie können die Teigstreifen aber auch aus einem beliebigen anderen Winkel quer zur Längsachse der Teigstreifen 15 greifen. Zudem besteht auch die Möglichkeit, dass nur eine der Greifeinheiten 70.1, 70.2 den Teigstreifen 15 quer zur Längsachse des Teigstreifens 15 greift. Dies ist in der Figur 13b dargestellt, wobei hier eine erste der Greifeinhelten 70.1 den Teigstreifen 15 senkrecht zur Längsachse des Teigstreifens 15 greift, während eine zweite Greifeinheit 70.2 den Teigstreifen parallel zur Längachse des Teigstreifens 15 greift. In weiteren Varianten können die Greifeinheiten auch derart ausgebildet sein, dass sie die Teigstreifen nicht von oben sondern von der Seite oder von unten her greifen können. Beispielsweise können die Greifeinheiten horizontal ausgerichtet sein, so dass die Teigstreifen vom Transportband an die Greifeinheiten einer Verdrillanordnung übergeben werden. Genauso können zwei Greifeinheiten einer Verdrillanordnung auch gegeneinander ausgerichtet sein und den Teigstreifen dadurch greifen, dass sie sich beidseitig von den Enden des Teigsteifens her dem Teigstreifen nähern und den Teigstreifen an den Enden greifen, während eine oder mehrere weitere Greifeinheiten dieser Verdrillanordnung quer zur Längsachse der Teigstreifen nähern und diesen greifen.

Zusammenfassend ist festzustellen, dass ein Verfahren sowie eine Vorrichtung geschaffen werden, welche ein kontrolliertes, regelmässiges Verdrillen von Teigstreifen ermöglichen.

## Patentansprüche

1. Verfahren zum maschinellen Verdrillen von mindestens einem Teigstreifen (15), welcher auf einem Träger bereit liegt, wobei der mindestens eine Teigstreifen (15) von mindestens einer wenigstens zwei Greifeinheiten (102.1, 102.12) umfassenden Verdrillanordnung gegriffen und verdrillt wird, indem die wenigstens zwei entlang einer im Wesentlichen geraden Linie angeordneten Greifeinheiten (102.1, ... 102.12) den mindestens einen Teigstreifen (15) an unterschiedlichen Greifpositionen entlang einer Längsachse des mindestens einen Teigstreifens (15) greifen, wobei wenigstens eine der wenigstens zwei Greifeinheiten (102.1, ... 102.12) den mindestens einen Teigstreifen (15) quer zur Längsachse des mindestens einen Teigstreifens (15) greift, indem die Greifrichtung, aus welcher diese Greifeinheit (102.1, ... 102.12) den mindestens einen Teigstreifen (15) greift, an ihrer Greifposition einen Winkel zur Ausrichtung der Längsachse des Teigstreifens (15) einschliesst, und indem wenigstens eine der wenigstens zwei Greifeinheiten (102.1, ... 102.12) den mindestens einen Teigstreifen (15) um seine Längsachse dreht.

2. Verfahren nach Anspruch 1, **dadurch gekennzeichnet, dass** der mindestens eine Teigstreifen (15) nach dem Greifen angehoben wird.

3. Verfahren nach Anspruch 1 oder 2, **dadurch gekennzeichnet, dass**
a) der mindestens eine Teigstreifen (15) von dem als Transportband (9) ausgebildeten Träger zugefördert wird,
b) der mindestens eine Teigstreifen (15) durch die mindestens eine Verdrillanordnung vom Transportband (9) gehoben wird,
c) der mindestens eine Teigstreifen (15) verdrillt wird und
d) der verdrillte mindestens eine Teigstreifen (16) wieder auf dem Transportband (9) deponiert wird.

4. Verfahren nach einem der Ansprüche 1 bis 3, **dadurch gekennzeichnet, dass** gleichzeitig durch mehrere Verdrillanordnungen mehrere Teigstreifen (15) verdrillt werden.

5. Vorrichtung (100) zum maschinellen Verdrillen von mindestens einem Teigstreifen (15), welcher auf einem Träger bereit liegt, umfassend mindestens eine wenigstens zwei Greifeinheiten (102.1, ... 102.12) umfassende Verdrillanordnung, wobei
a) die wenigstens zwei Greifeinheiten (102.1, ... 102.12) entlang einer im Wesentlichen geraden Linie angeordnet sind, um den mindestens einen Teigstreifen (15) von den wenigstens zwei Greifeinheiten (102.1, 102.12) an unterschiedlichen Greifpositionen entlang einer Längsachse des mindestens ein Teigstreifens (15) zu greifen,
b) und eine Greifersteuerung vorgesehen ist, um mindestens eine der wenigstens zwei Greifeinheiten (102.1, ... 102.12) zum Verdrillen des mindestens einen Teigstreifens (15) anzusteuern,
**dadurch gekennzeichnet, dass**
c) wenigstens eine der wenigstens zwei Greifeinheiten (102.1, ... 102.12) ausgebildet ist, um den mindestens einen Teigstreifen (15) quer zu seiner Längsachse zu greifen, indem die Greifrichtung, aus welcher diese Greifeinheit (102,1, ... 102.12) den mindestens einen Teigstreifen (15) greift, an ihrer Greifposition einen Winkel zur Ausrichtung der Längsachse des Teigstreifens (15) einschliesst.

6. Vorrichtung (100) nach Anspruch 5, **dadurch gekennzeichnet, dass** die wenigstens zwei Greifeinheiten (102.1, ... 102.12) je zwei Finger (152.1, 152.2) umfassen zum Greifen des mindestens einen Teigstreifens (15).

7. Vorrichtung (100) nach Anspruch 5 oder 6, **dadurch gekennzeichnet, dass** die mindestens eine Verdrillanordnung mehr als zwei Greifeinheiten (102.1, ... 102.12), vorzugsweise vier, sechs oder mehr Greifeinheiten (102.1, ... 102.12) umfasst.

8. Vorrichtung (100) nach Anspruch 6 oder 7, **dadurch gekennzeichnet, dass** die beiden Finger (152.1, 152.2) der wenigstens zwei Greifeinheiten (102.1, ... 102.12) je eines, vorzugsweise aber zwei, drei oder mehr Endlosbänder (156.1, ... 156.6) umfassen, welche durch einen steuerbaren Antrieb betätigbar sind.

9. Vorrichtung (100) nach Anspruch 8, **dadurch gekennzeichnet, dass** die Endlosbänder (156.1, ... 156.6) der Finger (152.1, 152.2) entlang einer Länge der Finger (152.1, 152.2) verlaufen und mit einer Hauptlauffläche zum anderen Finger (152.2, 152.1) der entsprechenden Greifeinheit (102.1, ... 102.12) ausgerichtet sind und dass die Greifersteuerung ausgebildet ist, um die Endlosbänder (156.1, ... 156.6) der beiden Finger (152.1, 152.2) gleichsinnig umlaufen zu lassen, um den Teigstreifen (15) zwischen den Fingern (152.1, 152.2) zu drehen.

10. Vorrichtung (100) nach einem der Ansprüche 6 bis 9, **dadurch gekennzeichnet, dass** wenigstens einer der beiden Finger (152.1, 152.2) der Greifeinheiten (102.1,... 102.12) schwankbar an einem Körper (151) der entsprechenden Greifeinheit (102.1, ....102.12) gelagert ist und durch eine Feder (159) mit einer vordefinierten Federkraft gegen den zweiten Finger (152.2, 152.1) vorgespannt ist.

11. Vorrichtung (100) nach einem der Ansprüche 5 bis 8, **dadurch gekennzeichnet, dass** an einem Körper (151) der entsprechenden Greifeinheit (1,02.1, ... 102.12) eine Parallellagerung der beiden Finger (152.1, 152.2) der Greifeinheiten (102.1, ... 102.12) vorgesehen ist, um die Finger parallel zueinander ausgerichtet und in einem variablen gegenseitigen Abstand beweglich zu lagern, wobei wenigstens einer der beiden Finger (152.1, 152.2) auf den anderen zu oder vom anderen weg bewegbar ist und durch eine Feder (159) mit einer vordefinierten Federkraft gegen den anderen Finger (152.2, 152.1) vorgespannt ist.

12. Vorrichtung (100) nach einem der Ansprüche 5 bis 11, **gekennzeichnet durch** einen als Transportband (9) ausgebildeten Träger, auf welchem der mindestens eine Teigstreifen (15) transportierbar ist.

13. Vorrichtung (100) nach Anspruch 12, **dadurch gekennzeichnet, dass** die im Wesentlichen gerade Linie, entlang welcher die wenigstens zwei Greifeinhalten (102.1, ... 102.12) der mindestens einen Verdrillanordnung angeordnet sind, quer zum Transportband (9) ausgerichtet ist.

14. Vorrichtung (100) einem der Ansprüche 5 bis 13, **gekennzeichnet durch** eine Absenkvorrichtung, **durch** welche die mindestens eine Verdrillanordnung absenkbar und hochhebbar ist..

15. Vorrichtung (100) nach Anspruch 14, **dadurch gekennzeichnet, dass** die beiden Finger (152.1, 152.2) der wenigstens zwei Greifeinheiten (102.1, ... 102.12) mit ihren freien Enden nach unten ausgerichtet sind und durch die Absenkvorrichtung auf das Transportband (9) senkbar sind, um den mindestens einen Teigstreifen (15) durch die Finger (152.1, 152.2) vom Transportband (9) abzuheben.

16. Vorrichtung (100) nach Anspruch 12 oder 13, **dadurch gekennzeichnet, dass** eine in Längsrichtung des Transportbandes bewegbare Haltevorrichtung vorgesehen ist, um die mindestens eine Verdrillanordnung synchron mit dem Transportband (9) mit einer Fördergeschwindigkeit des Transportbands (9) entlang einer Förderrichtung des Transportbands (9) zu bewegen, wobei gleichzeitig der mindestens eine Teigstreifen (15) hochhebbar ist, in einem hochgehobenen Zustand verdrillbar und nach dem Verdrillen an einer ursprünglichen Position auf dem Transportband (9) deponierbar ist.

17. Vorrichtung (100) nach einem der Ansprüche 5 bis 16, **dadurch gekennzeichnet, dass** sie mehr als eine Verdrillanordnung umfasst, wobei die Verdrillänordnungen derart angeordnet sind, dass die im Wesentlichen geraden Linien, entlang welchen die wenigstens zwei Greifeinheiten der Verdrillanordnungen angeordnet sind, parallel zueinander angeordnet sind.

## Claims

1. Method of mechanically twisting at least one dough strip (15) lying ready on a carrier, wherein the at least one dough strip (15) is gripped, and twisted, by at least one twisting arrangement, comprising at least two gripping units (102.1, ... 102.12) by virtue of the at least two gripping units (102.1, ... 102.12), which are arranged along an essentially straight line, gripping the at least one dough strip (15) at different gripping positions along a longitudinal axis of the at least one dough strip (15), wherein at least one of the at least two gripping units (102.1, ... 102.12) grips the at least one dough strip (15) in a direction transverse to the longitudinal axis of the at least one dough strip (15) by virtue of the gripping direction from which said gripping unit (102.1, ... 102.12) grips the at least one dough strip (15) enclosing an angle, at its gripping position, with the orientation of the longitudinal axis of the dough strip (15), and by virtue of at least one of the at least two gripping units (102.1, ... 102.12) rotating the at least one dough strip (15) about its longitudinal axis.

2. Method according to Claim 1, **characterized in that** the at least one dough strip (15), once gripped, is raised.

3. Method according to Claim 1 or 2, **characterized in that**
a) the at least one dough strip (15) is supplied by the carrier, designed in the form of a transporting belt (9),
b) the at least one dough strip (15) is raised from the transporting belt (9) by the at least one twisting arrangement,
c) the at least one dough strip (15) is twisted, and
d) the twisted at least one dough strip (16) is deposited again on the transporting belt (9).

4. Method according to one of Claims 1 to 3, **characterised in that** a plurality of dough strips (15) are twisted at the same time by a plurality of twisting arrangements.

5. Apparatus (100) for mechanically twisting at least one dough strip (15) lying ready on a carrier, comprising at least one twisting arrangement, comprising at least two gripping units (102.1, ... 102.12), wherein
a) the at least two gripping units (102.1, ... 102.12) are arranged along an essentially straight line, in order for the at least one dough strip (15) to be gripped by the at least two gripping units (102.1, ... 102.12) at different gripping positions along a longitudinal axis of the at least one dough strip (15),
b) and a gripper-control device is provided, in order to activate at least one of the at least two gripping units (102.1, ... 102.12) for the purpose of twisting the at least one dough strip (15),
**characterized in that**
c) at least one of the at least two gripping units (102.1, ... 102.12) is designed to grip the at least one dough strip (15) in a direction transverse to its longitudinal axis by virtue of the gripping direction from which said gripping unit (102,1, ... 102.12) grips the at least one dough strip (15) enclosing an angle, at is gripping position, with the orientation of the longitudinal axis of the dough strip (15).

6. Apparatus (100) according to Claim 5, **characterized in that** the at least two gripping units (102.1, ... 102.12) each comprise two fingers (152.1, 152.2) for gripping the at least one dough strip (15).

7. Apparatus (100) according to Claim 5 or 6, **characterized in that** the at least one twisting arrangement comprises more than two gripping units (102.1, ... 102.12), preferably four, six or more gripping units (102.1, ... 102.12).

8. Apparatus (100) according to Claim 6 or 7, **characterized in that** the two fingers (152.1, 152.2) of the at least two gripping units (102.1, ... 102.12) each comprise one endless belt, but preferably two, three, or more endless belts (156.1, ... 156.6), which can be actuated by a controllable drive.

9. Apparatus (100) according to Claim 8, **characterised in that** the endless belts (156.1, ... 156.6) of the fingers (152.1, 152.2) run along a length of the fingers (152.1, 152.2) and have a main running surface aligned with the other finger (152.2, 152.1) of the corresponding gripping unit (102.1, ... 102.12), and **in that** the gripper-control device is designed to allow for circulation of the endless belts (156.1, ... 156.6) of the two fingers (152.1, 152.2) in the same direction, in order to rotate the dough strip (15) between the fingers (152.1, 152.2).

10. Apparatus (100) according to one of Claims 6 to 9, **characterized in that** at least one of the two fingers (152.1, 152.2) of the gripping units (102.1, ... 102.12) is mounted in a pivotable manner on a body (151) of the corresponding gripping unit (102.1, ... 102.12) and is prestressed by a spring (159), with a predefined spring force, against the second finger (152.2, 152.1).

11. Apparatus (100) according to one of Claims 5 to 8, **characterized in that** the two fingers (152.1, 152.2) of the gripping units (102.1, ... 102.12) are parallel-mounted on a body (151) of the corresponding gripping unit (102.1, ... 102.12), so that the fingers are mounted with parallel orientation in relation to one another and such that they can be moved at a variable distance from one another, wherein at least one of the two fingers (152.1, 152.2) can be moved towards, or away from, the other and is prestressed by a spring (159), with a predefined spring force, against the other finger (152.2, 152.1).

12. Apparatus (100) according to one of Claims 5 to 11, **characterized by** a carrier which is designed in the form of a transporting belt (9) and on which the at least one dough strip (15) can be transported.

13. Apparatus (100) according to Claim 12, **characterized in that** the essentially straight line, along which the at least two gripping units (102.1, ... 102.12) of the at least one twisting arrangement are arranged, is oriented transversally to the transporting belt (9).

14. Apparatus (100) according to one of Claims 5 to 13, **characterised by** a lowering apparatus, by means of which the at least one twisting arrangement can be lowered and raised upwards.

15. Apparatus (100) according to Claim 14, **characterized in that** the two fingers (152.1, 152.2) of the at least two gripping units (102.1, ... 102.12) have their free ends oriented downwards and can be lowered onto the transporting belt (9) by means of the lowering apparatus in order for the at least one dough strip (15) to be raised up from the transporting belt (9) by the fingers (152.1, 152.2).

16. Apparatus (100) according to Claim 12 or 13, **characterized by** the provision of a retaining apparatus, which can be moved in the longitudinal direction of the transporting belt in order for the at least one twisting arrangement to be moved synchronously with the transporting belt (9), along a conveying direction of the transporting belt (9), at a conveying speed of the transporting belt (9), wherein, at the same time, the at least one dough strip (15) can be raised upwards, twisted in a raised-up state and, once twisted, deposited at an original position on the transporting belt (9).

17. Apparatus (100) according to one of Claims 5 to 16, **characterized in that** it comprises more than one twisting arrangement, wherein the twisting arrangements are arranged such that the essentially straight lines, along which the at least two gripping units of the twisting arrangements are arranged, are arranged parallel to one another.

## Revendications

1. Procédé de torsion par machine d'au moins une bande de pâte (15) préparée sur un support, l'au moins une bande de pâte (15) étant saisie et tordue par au moins un agencement de torsion comprenant au moins deux unités de préhension (102.1, ..., 102.12), par le fait que les au moins deux unités de préhension (102.1, ..., 102.12) disposées le long d'une ligne essentiellement droite saisissent l'au moins une bande de pâte (15) en des positions de préhension différentes le long d'un axe longitudinal de l'au moins une bande de pâte (15), au moins l'une des au moins deux unités de préhension (102.1, ..., 102.12) saisissant l'au moins une bande de pâte (15) transversalement à l'axe longitudinal de l'au moins une bande de pâte (15), par le fait que la direction de préhension depuis laquelle cette unité de préhension (102.1, ..., 102.12) saisit l'au moins une bande de pâte (15) forme, dans sa position de préhension, un angle par rapport à l'orientation de l'axe longitudinal de la bande de pâte (15) et par le fait qu'au moins l'une des au moins deux unités de préhension (102.1, ..., 102.12) fait tourner l'au moins une bande de pâte (15) autour de son axe longitudinal.

2. Procédé selon la revendication 1, **caractérisé en ce que** l'au moins une bande de pâte (15) est soulevée après sa préhension.

3. Procédé selon la revendication 1 ou 2, **caractérisé en ce que**
a) l'au moins une bande de pâte (15) est acheminée par le support réalisé sous forme de bande transporteuse (9),
b) l'au moins une bande de pâte (15) est soulevée de la bande transporteuse (9) par l'au moins un agencement de torsion,
c) l'au moins une bande de pâte (15) est tordue et
d) l'au moins une bande de pâte tordue (16) est à nouveau déposée sur la bande transporteuse (9).

4. Procédé selon l'une quelconque des revendications 1 à 3, **caractérisé en ce que** plusieurs bandes de pâte (15) sont tordues simultanément par plusieurs agencements de torsion.

5. Dispositif (100) pour la torsion par machine d'au moins une bande de pâte (15) préparée sur un support, comprenant au moins un agencement de torsion comprenant au moins deux unités de préhension (102.1, ..., 102.12),
a) les au moins deux unités de préhension (102.1, ... , 102.12) étant disposées le long d'une ligne essentiellement droite, afin de saisir l'au moins une bande de pâte (15) par les au moins deux unités de préhension (102.1, ..., 102.12) en des positions de préhension différentes le long d'un axe longitudinal de l'au moins une bande de pâte (15),
b) et une commande de préhension étant prévue, afin de commander au moins l'une des au moins deux unités de préhension (102.1, ..., 102.12) pour tordre l'au moins une bande de pâte (15), **caractérisé en ce que**
c) au moins l'une des au moins deux unités de préhension (102.1, ..., 102.12) est réalisée pour saisir l'au moins une bande de pâte (15) transversalement à son axe longitudinal, la direction de préhension depuis laquelle cette unité de préhension (102.1, ..., 102.12) saisit l'au moins une bande de pâte (15) formant, dans sa position de préhension, un angle par rapport à l'orientation de l'axe longitudinal de la bande de pâte (15).

6. Dispositif (100) selon la revendication 5, **caractérisé en ce que** les au moins deux unités de préhension (102.1, ..., 102.12) comprennent chacune deux doigts (152.1, 152.2) pour saisir l'au moins une bande de pâte (15).

7. Dispositif (100) selon la revendication 5 ou 6, **caractérisé en ce que** l'au moins un agencement de torsion comprend plus de deux unités de préhension (102.1, ..., 102.12), de préférence quatre, six ou davantage d'unités de préhension (102.1, ..., 102.12).

8. Dispositif (100) selon la revendication 6 ou 7, **caractérisé en ce que** les deux doigts (152.1, 152.2) des au moins deux unités de préhension (102.1, ..., 102.12) comprennent chacun une, de préférence toutefois deux, trois ou davantage de bandes sans fin (156.1, ..., 156.6), qui peuvent être commandées par un entraînement commandable.

9. Dispositif (100) selon la revendication 8, **caractérisé en ce que** les bandes sans fin (156.1, ..., 156.6) des doigts (152.1, 152.2) s'étendent le long d'une longueur des doigts (152.1, 152.2) et sont orientées avec une surface d'avance principale par rapport à l'autre doigt (152.2, 152.1) de l'unité de préhension correspondante (102.1, ..., 102.12) et **en ce que** la commande de préhension est réalisée pour faire circuler dans le même sens les bandes sans fin (156.1, ..., 156.6) des deux doigts (152.1, 152.2) afin de faire tourner la bande de pâte (15) entre les doigts (152.1, 152.2).

10. Dispositif (100) selon l'une quelconque des revendications 6 à 9, **caractérisé en ce qu'**au moins l'un des deux doigts (152.1, 152.2) des unités de préhension (102.1, ..., 102.12) est supporté de manière pivotante sur un corps (151) de l'unité de préhension correspondante (102.1, ..., 102.12) et est précontraint par un ressort (159) avec une force de ressort prédéfinie contre le deuxième doigt (152.2, 152.1).

11. Dispositif (100) selon l'une quelconque des revendications 5 à 8, **caractérisé en ce qu'**un support parallèle des deux doigts (152.1, 152.2) des unités de préhension (102.1, ..., 102.12) est prévu au niveau d'un corps (151) de l'unité de préhension correspondante (102.1, ..., 102.12), afin de supporter de manière déplaçable les doigts de manière orientée parallèlement l'un à l'autre et à une distance mutuelle variable, au moins l'un des deux doigts (152.1, 152.2) pouvant être déplacé vers l'autre ou à l'écart de l'autre et étant précontraint contre l'autre doigt (152.2, 152.1) par un ressort (159) avec une force de ressort prédéfinie,

12. Dispositif (100) selon l'une quelconque des revendications 5 à 11, **caractérisé par** un support réalisé sous forme de bande transporteuse (9), sur lequel peut être transportée l'au moins une bande de pâte (15).

13. Dispositif (100) selon la revendication 12, **caractérisé en ce que** la ligne essentiellement droite le long de laquelle sont disposées les au moins deux unités de préhension (102.1, ..., 102.12) de l'au moins un agencement de torsion est orientée transversalement par rapport à la bande transporteuse (9).

14. Dispositif (100) selon l'une quelconque des revendications 5 à 13, **caractérisé par** un dispositif d'abaissement permettant d'abaisser et de soulever l'au moins un agencement de torsion.

15. Dispositif (100) selon la revendication 14, **caractérisé en ce que** les deux doigts (152.1, 152.2) des au moins deux unités de préhension (102.1, ..., 102.12) sont orientés vers le bas avec leurs extrémités libres et peuvent être abaissés par le dispositif d'abaissement sur la bande transporteuse (9) afin de soulever l'au moins une bande de pâte (15) de la bande transporteuse (9) par les doigts (152.1, 152.2).

16. Dispositif (100) selon la revendication 12 ou 13, **caractérisé en ce qu'**il est prévu un dispositif de retenue déplaçable dans la direction longitudinal de la bande transporteuse, afin de déplacer l'au moins un agencement de torsion de manière synchronisée avec la bande transporteuse (9) à une vitesse de transport de la bande transporteuse (9) le long d'une direction de transport de la bande transporteuse (9), l'au moins une bande de pâte (15) pouvant simultanément être soulevée, être tordue dans l'état soulevé et après la torsion être déposée sur la bande transporteuse (9) dans une position initiale.

17. Dispositif (100) selon l'une quelconque des revendications 5 à 16, **caractérisé en ce qu'**il présente plus d'un agencement de torsion, les agencements de torsion étant disposés de telle sorte que les lignes essentiellement droites le long desquelles sont disposées les au moins deux unités de préhension des agencements de torsion soient disposées parallèlement les unes aux autres.
